(19) Europäisches Patentamt
European Patent Office
Office européen des brevets

(11) EP 2 600 217 A1

(12) EUROPEAN PATENT APPLICATION
published in accordance with Art. 153(4) EPC

(43) Date of publication:
**05.06.2013 Bulletin 2013/23**

(21) Application number: **11812081.5**

(22) Date of filing: **28.07.2011**

(51) Int Cl.:
***G05B 19/404*** *(2006.01)* ***G05B 19/416*** *(2006.01)*

(86) International application number:
**PCT/JP2011/004277**

(87) International publication number:
**WO 2012/014479 (02.02.2012 Gazette 2012/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2010 JP 2010171050**

(71) Applicant: **Shin Nippon Koki Co., Ltd.**
**Osaka-shi**
**Osaka 541-0057 (JP)**

(72) Inventor: **NISHIBASHI, Nobutaka**
**Osaka-shi, Osaka 541-0057 (JP)**

(74) Representative: **Müller-Boré & Partner**
**Patentanwälte**
**Grafinger Straße 2**
**81671 München (DE)**

# (54) NUMERICAL CONTROL APPARATUS

(57) Disclosed is a numerical control apparatus installed in a machine tool which includes: a plurality of transfer devices which transfer a movement target object, which is a workpiece or a tool to process the workpiece, when the workpiece is processed; and a special command input device for inputting, from outside, a special command for instructing an operation involving a velocity change of the movement target object separately from normal transfer of the movement target object performed when the workpiece is processed, each of the transfer devices including a support for supporting the movement target object, and a driving device which transfers the movement target object by transferring the support in a predetermined movement axis direction. The numerical control apparatus performs numerical control of each of the transfer devices and includes a storage unit which stores a processing command program which specifies a processing path to indicate a path where the movement target object is to move as a reference time elapses when the workpiece is processed; a computing unit which calculates, on the basis of the processing path, a moving distance of each support in the corresponding movement axis direction per set unit time; and a drive control unit which causes each driving device to transfer the support corresponding to that driving device in accordance with the moving distance of each support calculated by the computing unit. In response to the input of the special command to the special command input device, the computing unit changes a length of the set unit time from a length in the state immediately before the input of the special command to a length corresponding to the velocity change of the movement target object instructed by the special command, and calculates, on the basis of the processing path, the moving distance of each support in the corresponding movement axis direction per set unit time of which length has been changed.

FIG.8

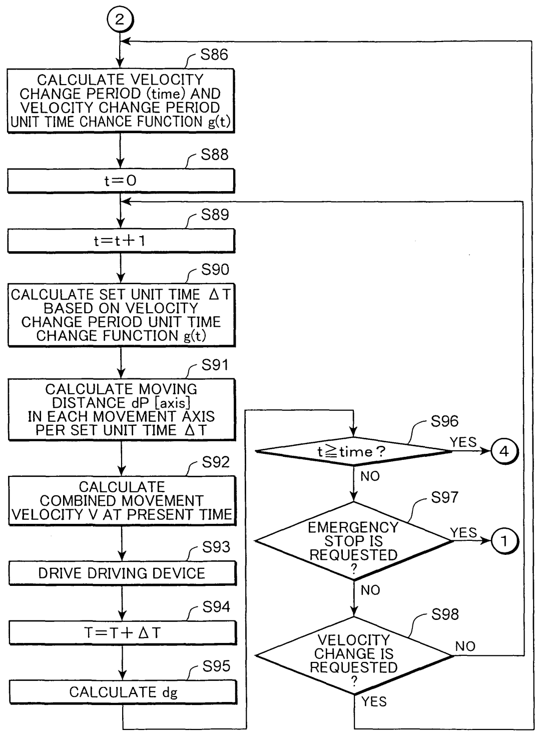


EP 2 600 217 A1

**Description**

Technical Field

The present invention relates to a numerical control apparatus.

Background Art

In various conventional machine tools, workpieces are processed by performing numerical control for a transfer device, which transfers a workpiece or a tool to process the workpiece, according to a processing command program (NC program). In such a machine tool, an instruction device that can manually instruct an operation involving acceleration/deceleration of a workpiece or a tool is normally installed. If an operator instructs using this instruction device, an operation involving acceleration/deceleration of a workpiece or a tool can be executed separately from normal transfer of a workpiece or a tool according to the processing command program.

In concrete terms, an emergency stop device, restart device, override device or the like are installed in a machine tool as the instruction device. The emergency stop device is for instructing an emergency stop of a transfer of a movement target object, that is, a workpiece or a tool, when the movement target object is in-transfer by a transfer device. The emergency stop device has an emergency stop button, and by pressing the emergency stop button, the transfer device is instructed to urgently stop the transfer of the movement target object. The restart device is for instructing restart of the movement target object after emergency stop. The restart device has a restart button, and by pressing the restart button, the transfer device is instructed to restart the transfer of the movement target object. The override device has an override dial, and by operating the override dial, the transfer device is instructed to accelerate/decelerate the transfer speed of the movement target object corresponding to the control input of the override dial. In the case of the emergency stop, the movement target object is rapidly decelerated, and in the case of restart, the movement target object is rapidly accelerated, and if acceleration/deceleration is instructed by the override device, more rapid acceleration/deceleration is performed compared with the case of normal movement of the movement target object.

When such an operation involving the acceleration/deceleration of the movement target object is performed in a machine tool, a mechanical shock is applied to the machine tool. Conventionally techniques to decrease the mechanical shock due to rapid acceleration/deceleration of the movement target object have been proposed. An example of such a technique is an acceleration/deceleration after interpolation using an acceleration/deceleration filter. The acceleration/deceleration after interpolation is a technique to relax the rapid acceleration/deceleration instructed by a processing command program and rapid acceleration/deceleration instructed by the instruction device by generating, with using an acceleration/deceleration filter, a delay of a movement command acquired from the processing command program based on the interpolation operation, for an amount of time corresponding to a predetermined command time constant.

Although this technique of the acceleration/deceleration after interpolation has an advantage of relaxing the mechanical shock caused by rapid acceleration/deceleration of the movement target object, a problem is that an error is generated in the processed shape of the workpiece. In concrete terms, this technique of the acceleration/deceleration after interpolation is effective for both relaxing rapid acceleration/deceleration instructed by the processing command program and relaxing rapid acceleration/deceleration instructed by the instruction device, on the other hand, if this technique of the acceleration/deceleration is applied to relaxing rapid acceleration/deceleration instructed by the processing command program, an error is generated in an actual processing shape compared with a processing shape (processing path) instructed by the processing command program. Further, if this interpolated acceleration/deceleration technique is applied to relaxing rapid acceleration/deceleration instructed by the instruction device, a further error is generated in the processing path compared with the original processing path, after the rapid acceleration/deceleration instructed by the processing command program is relaxed by the interpolated acceleration/deceleration technique, which may scratch the workpiece.

To solve these problems, Patent Document 1 below discloses a technique to perform an operation to cancel a phase error generated between each movement axis of the movement target object, so as to correct the error of the processing shape generated by the acceleration/deceleration after interpolation.

Patent Document 2 below discloses an acceleration/deceleration technique which does not use the interpolated acceleration/deceleration at all. According to this acceleration/deceleration technique, the processing path for relaxing rapid acceleration/deceleration instructed by the processing command program is calculated in advance by the acceleration/deceleration operation before interpolation, which is performed before calculating a movement pulse for each movement axis of the movement target object based on the processing command program. Therefore a processing path that does not generate a mechanical shock can be predetermined, and the movement target object can be moved according to this processing path. As a consequence, if this acceleration/deceleration technique is used, mechanical shock caused by the rapid acceleration/deceleration of the movement target object can be reduced without generating an error due to the above mentioned acceleration/deceleration after interpolation.

However in both techniques according to Patent Document 1 and Patent Document 2, complicated recalculation according to an instruction from the instruction device is required in order to relax rapid acceleration/deceleration as instructed by the instruction device. This causes a problem whereby responsiveness, from the instruction device instructing the operation involving acceleration/deceleration of the movement target object until actual execution of the instructed operation of the movement target object, becomes poor.

In concrete terms, when an operation that involves acceleration/deceleration is performed in a machine tool, such as the above mentioned emergency stop, acceleration associated with restart and acceleration/deceleration by an override device, the operation that involves acceleration/deceleration must be executed quickly after instructing the operation involving the acceleration/deceleration (e.g. ON of the emergency stop button or restart button, operating the override dial), and without the actual movement locus of the movement target object deviating from the scheduled processing path, but in both of the techniques according to Patent Document 1 and Patent Document 2, computing the movement command is complicated and takes time, and as a result, responsiveness, from instructing the acceleration/deceleration operation to actual execution of the acceleration/deceleration operation, becomes poor.

Patent Document 1: Japanese Patent Application Laid-Open No. 2010-55161
Patent Document 2: Japanese Patent Application Laid-Open No. 2008-225825

Summary of the Invention

It is an object of the present invention to solve the above mentioned problems.

In other words, it is an object of the present invention to provide a numerical control apparatus where, when operation involving velocity change of a movement target object is executed in a machine tool separately from normal transfer of a movement target object performed when a workpiece is processed, responsiveness, from instructing the operation involving the velocity change of the movement target object to actual execution of this operation, can be improved, while preventing deviation of the movement locus of the movement target object from the processing path instructed by the processing command program.

A numerical control apparatus according to an aspect of the present invention is a numerical control apparatus installed in a machine tool which includes: a plurality of transfer devices which transfer a movement target object, which is a workpiece or a tool to process the workpiece, when the workpiece is processed; and a special command input device for inputting, from outside, a special command for instructing an operation involving a velocity change of the movement target object separately from normal transfer of the movement target object performed when the workpiece is processed, each of the transfer devices including a support for supporting the movement target object, and a driving device which transfers the movement target object by transferring the support in a predetermined movement axis direction, the numerical control apparatus performing numerical control of each of the transfer devices and including: a storage unit which stores a processing command program which specifies a processing path to indicate a path where the movement target object is to move as a reference time elapses when the workpiece is processed; a computing unit which calculates, on the basis of the processing path, a moving distance of each support in the corresponding movement axis direction per set unit time; and a drive control unit which causes each driving device to transfer the support corresponding to that driving device in accordance with the moving distance of each support calculated by the computing unit, wherein in response to the input of the special command to the special command input device, the computing unit changes a length of the set unit time from a length in the state immediately before the input of the special command to a length corresponding to the velocity change of the movement target object instructed by the special command, and calculates, on the basis of the processing path, the moving distance of each support in the corresponding movement axis direction per set unit time of which length has been changed.

Brief Description of the Drawings

[Fig. 1] Fig. 1 is a schematic side view of a machine tool to which a numerical control apparatus according to an embodiment of the present invention is applied.
[Fig. 2] Fig. 2 is a functional block diagram of the numerical control apparatus according to an embodiment of the present invention.
[Fig. 3] Fig. 3 is a functional block diagram of a movement command path deriving unit and a memory.
[Fig. 4] Fig. 4 is a flow chart depicting a numerical control process by the numerical control apparatus according to an embodiment of the present invention.
[Fig. 5] Fig. 5 is a flow chart depicting a special command monitoring process by an acceleration/deceleration request monitoring unit.
[Fig. 6] Fig. 6 is a flow chart depicting an emergency stop process of a movement target object.
[Fig. 7] Fig. 7 is a flow chart depicting a restart process of the movement target object.
[Fig. 8] Fig. 8 is a flow chart depicting a velocity change process of the movement target object.
[Fig. 9] Fig. 9 is a flow chart depicting a process of calculating a period (time) required for the operation involving acceleration/deceleration and unit time change function g(t) to indicate a change of unit time during this period.
[Fig. 10] Fig. 10 is a graph depicting a stop period unit time change function when the emergency stop process is executed for the movement target object moving at a constant velocity.
[Fig. 11] Fig. 11 is a graph depicting a stop period unit time change function when the emergency stop process is executed for the movement target object during acceleration.
[Fig. 12] Fig. 12 is a graph depicting a stop period unit time change function when the emergency stop process is executed for the movement target object during deceleration.
[Fig. 13] Fig. 13 is a graph for explaining a stop period unit time change function constituted by three blocks.
[Fig. 14] Fig. 14 is a graph depicting a restart period unit time change function constituted by three blocks when the restart process is executed for the movement target object.
[Fig. 15] Fig. 15 is a graph depicting a restart period unit time change function constituted by two blocks when the restart process is executed for the movement target object.
[Fig. 16] Fig. 16 is a graph depicting a velocity change period unit time change function when the acceleration process is executed for the movement target object moving at a constant velocity.
[Fig. 17] Fig. 17 is a graph depicting a velocity change period unit time change function when the acceleration process is further executed for the movement target object during acceleration of the movement target object.
[Fig. 18] Fig. 18 is a graph depicting a velocity change period unit time change function when the acceleration process is executed for the movement target object during deceleration.
[Fig. 19] Fig. 19 is a graph depicting a velocity change period unit time change function when the deceleration process is executed for the movement target object moving at a constant velocity.
[Fig. 20] Fig. 20 is a graph depicting a velocity change period unit time change function when the deceleration process is executed for the movement target object during acceleration.
[Fig. 21] Fig. 21 is a graph depicting a velocity change period unit time change function when a deceleration process is further executed for the movement target object during deceleration of the movement target object.

Mode for Carrying Out the Invention

Embodiments of the present invention will now be described with reference to the drawings.

First, a configuration of a machine tool to which a numerical control apparatus 2 according to an embodiment of the present invention is applied is described with reference to Fig. 1 and Fig. 2.

The machine tool where the numerical control apparatus 2 (see Fig. 2) of this embodiment is installed is for cutting a workpiece 100 as a processing target. This machine tool has a workpiece transfer device 102, a column 104, a tool 105, a vertical tool transfer device 106, a first horizontal tool transfer device 108, a second horizontal tool transfer device 110, a spindle head 112 and a control panel 114. The workpiece transfer device 102, the vertical tool transport device 106, the first horizontal tool transfer device 108 and the second horizontal tool transfer device 110 are included in the concept of the transfer device of the present invention respectively.

The workpiece transfer device 102 is a device for transferring the workpiece 100 in the X axis direction, which is a direction vertical to the sheet in Fig. 1. The work piece transfer device 102 has a base 102a which is secured in a predetermined installation location, a work support 102b which is installed on the base 102a so as to be movable in the X axis direction, and a workpiece driving device 102c (see Fig. 2) that transfers the workpiece support 102b in the X axis direction. The workpiece support 102b supports the workpiece 100. The workpiece 100 is installed in a state of vertically standing on the workpiece support 102b. The workpiece driving device 102c has a servo motor as a driving source. The X axis is included in the concept of the movement axis of the present invention. The workpiece support 102b is included in the concept of the support of the present invention. The workpiece driving device 102c is included in the concept of the driving device of the present invention.

The column 104 is vertically installed in a position which is distant from the installation position of the base 102a in the horizontal direction and a direction perpendicular to the X axis, and extends in the vertical direction.

The vertical tool transfer device 106 is installed in the column 104. The vertical tool transfer device 106 is a device for transferring the tool 105 for cutting the workpiece 100 in the Y axis direction, which is the vertical direction. The vertical tool transfer device 106 has a vertical support 106a which is installed in the column 104 so as to be movable in the Y axis direction, and a vertical driving device 106b (see Fig. 2) which is installed in the column 104, so as to transfer the vertical support 106a in the Y axis direction along the column 104. The vertical support 106a supports the first horizontal tool transfer device 108. The first horizontal tool transfer device 108 supports the tool 105 via the second horizontal tool transfer device 110 and the spindle head 112 as described later, which means that the vertical support 106a indirectly supports the tool 105. The vertical driving device 106b has a servo motor as the driving source. The Y axis direction is included in the concept of the movement axis of the present invention. The vertical support 106a is included in the concept of the support of the present invention. The vertical driving device 106b is included in the concept of the driving device of the present invention.

The first horizontal tool transfer device 108 is installed in the vertical support 106a. The first horizontal tool transfer device 108 is a device for transferring the tool 105 in the W axis direction, which extends vertically from both the X axis and the Y axis. The first horizontal tool transfer device 108 has a first horizontal support 108a which is installed in the vertical support 106a so as to be movable in the W axis direction, and a first horizontal driving device 108b (see Fig. 2), which is installed in the vertical support 106a and transfers the first horizontal support 108a, so as to move in the W axis direction. The first horizontal support 108a supports the second horizontal tool transfer device 110. The second horizontal tool transfer device 110 supports the tool 105 via the spindle head 112 as described later, which means that the first horizontal support 108a indirectly supports the tool 105. The first horizontal driving device 108b has a servo motor as a driving source. The W axis is included in the concept of the movement axis of the present invention. The first horizontal support 108a is included in the concept of the support of the present invention. The first horizontal driving device 108b is included in the driving device of the present invention.

The second horizontal tool transfer device 110 is installed in the first horizontal support 108a. The second horizontal tool transfer device 110 is a device for transferring the tool 105 in a Z axis direction which is parallel with the W axis. The second horizontal tool transfer device 110 has a second horizontal support 110a which is installed in the first horizontal support 108a so as to be movable in the Z axis direction, and a second horizontal driving device 110b, which is installed in the first horizontal support 108a and transfers the second horizontal support 110a, so as to move in the Z axis direction. The second horizontal support 110a supports the spindle head 112. The second horizontal support 110a supports the tool 105 via the spindle head 112. The second horizontal driving device 110b has a servo motor as a driving source. The Z axis is included in the concept of the movement axis of the present invention. The second horizontal support 110a is included in the concept of the support of the present invention. The second horizontal driving device 110b is included in the concept of the driving device of the present invention.

The spindle head 112 is installed in the second horizontal support 110a so that the rotation axis thereof is parallel with the W axis and the Z axis. The spindle head 112 holds the tool 105 and rotates the tool 105 around an axis thereof. The tool 105 is rotated by the spindle head 112, whereby the edge of the tool 105 cuts the workpiece 100.

The control panel 114 has a function to control driving of each transfer device 102, 106, 108 and 110, to control driving of the spindle head 112, and to control each component of the machine tool. This control panel 114 is electrically connected with the driving source of each driving device 102c, 106b, 108b and 110b and the spindle head 112.

The control panel 114 also has a special command input device 122 (see Fig. 2). The special command input device 122 is a device to input, from outside, a special command to instruct operations of the workpiece 100 and the tool 105 involving acceleration or deceleration, separately from normal transfers of the workpiece 100 and the tool 105 performed when the workpiece 100 is processed. The workpiece 100 or the tool 105 transferred by the transfer device 102, 106, 108 or 110 is called a "moving target object" hereinbelow.

The special command input device 122 includes a stop command input device 124, a restart command input device 126 and an override device 128.

The stop command input device 124 is a device to input an emergency stop command to urgently decelerate and stop movement of the movement target object. The emergency stop command is included in the concept of the special command of the present invention. The stop command input device 124 has an emergency stop button 124a which is disposed on the outer surface of the control panel 114, and a stop signal transmission unit 124b that transmits an emergency stop signal to a later mentioned acceleration/deceleration request monitoring unit 10 in response to the pressing of the emergency stop button 124a. In this embodiment, pressing the emergency stop button 124a corresponds to the input of the emergency stop command.

The restart command input device 126 is a device for receiving a restart command to restart and accelerate the movement of the stopping movement target object. The restart command is included in the concept of the special command of the present invention. The restart command input device 126 has a restart button 126a which is disposed on the outer surface of the control panel 114, and a restart signal transmission unit 126b for transmitting a restart signal to the later mentioned acceleration/deceleration request monitoring unit 10 in response to the pressing of the restart button 126a. In this embodiment, pressing the restart button 126a corresponds to the input of the restart command.

The override device 128 is a device for receiving an acceleration command or a deceleration command. The acceleration command includes an instruction to increase the movement velocity of the movement target object, and information on the acceleration rate which is the increase rate of the movement velocity. The deceleration command includes an instruction to decrease the movement velocity of the movement target object, and information on the deceleration rate which is the decrease rate of the movement velocity. This override device 128 is included in the concept of the velocity change command input device of the present invention. The acceleration command and the deceleration command are included in the concept of the special command of the present invention.

The override device 128 has an override dial 128a which is disposed on the outer surface of the control panel 114, and a velocity change signal transmission unit 128b that transmits a velocity change signal corresponding to the controlling direction and the control input of the override dial 128a, to the later mentioned acceleration/deceleration request monitoring unit 10.

The override dial 128a is an operation unit to be operated when the operator, etc. inputs an acceleration command or a deceleration command. The override dial 128a is disposed on the control panel 114 so as to be rotatable around the axis thereof. The acceleration command or the deceleration command can be inputted to the override device 128 by rotating the override dial 128a to one side or the other. In this embodiment, the operation of rotating the override dial 128a to one side corresponds to the input of the acceleration command, and the operation of rotating the override dial 128a to the opposite side corresponds to the input of the deceleration command. The rotating amount of the override dial 128a to the one side corresponds to the acceleration rate of the movement target object, and the rotating amount of the override dial 128a to the opposite side corresponds to the deceleration rate of the movement target object.

In response to rotating the override dial 128a to the one side (acceleration side), the velocity change signal transmission unit 128b transmits, to the acceleration/deceleration request monitoring unit 10, a velocity change signal including information on an override coefficient corresponding to the rotating amount of the override dial 128a to the one side, or in response to rotating the override dial 128a to the opposite side (deceleration side), the velocity change signal transmission unit 128b transmits, to the acceleration/deceleration request monitoring unit 10, a velocity change signal including information on an override coefficient corresponding to the rotating amount of the override dial 128a the opposite side. The override coefficient corresponding to the rotating amount of the override dial 128a to the one side is included in the concept of the acceleration rate of the present invention, and the override coefficient corresponding to the rotating amount of the override dial 128a to the opposite side is included in the concept of the deceleration rate of the present invention. The reference of the override coefficient is 1. As the override dial 128a is rotated to the acceleration side, the override coefficient increases from 1, and as the override dial 128a is rotated to the deceleration side, the override coefficient decreases from 1.

The numerical control apparatus 2 according to this embodiment is integrated into the control panel 114, and performs numerical control for each transfer device 102, 106, 108 and 110. Now the configuration of the numerical control apparatus 2 of the present embodiment will be described in detail with reference to Fig. 1 to Fig. 3.

As Fig. 2 shows, the numerical control apparatus 2 has a storage unit 4, a memory 5 and a processor 6.

The storage unit 4 stores an NC program as a processing command program. This NC program specifies a processing path that indicates a path where the movement target object should move as the reference time elapses when the workpiece 100 is processed. The processing path indicates a correlation of the reference time and a position of the movement target object when the workpiece 100 is processed.

The memory 5 stores such information as an override coefficient at the instant immediately before the special command is inputted to the special command input device 122, and an override coefficient included in the velocity change signal.

The processor 6 performs various processings, such as computing, on the basis of the processing path included in the NC program stored in the storage unit 4, a moving distance of each support 102b, 106a, 108a and 110a per set unit time, drive control for each driving device 102c, 106b, 108b and 110b, and monitoring the input of a special command to the special command input device 122. The processor 6 has the acceleration/deceleration request monitoring unit 10, a computing unit 12 and a drive control unit 14.

The accumulation/deceleration.request monitoring unit 10 monitors whether the special command is inputted to the special command input device 122.

In concrete terms, the acceleration/deceleration request monitoring unit 10 detects an emergency stop signal transmitted from the stop signal transmission unit 124b, so as to monitor whether a deceleration stop command is inputted to the stop command input device 124, that is, whether the emergency stop button 124a of the stop command input device 124 is pressed. To be more specific, the acceleration/deceleration request monitoring unit 10 determines that the emergency stop button 124a is pressed if the emergency stop signal is transmitted from the stop signal transmission unit 124b, and determines that the emergency stop button 124a is not pressed if the emergency stop signal is not transmitted from the stop signal transmission unit 124b. In response to the input of the deceleration stop command to the stop command input device 124, that is, the transmission of the emergency stop signal from the stop signal transmission unit 124b, the acceleration/deceleration request monitoring unit 10 outputs an emergency stop request to a later mentioned moving distance calculation unit 22 of the computing unit 12.

The acceleration/deceleration request monitoring unit 10 also detects a restart signal transmitted from the restart signal transmission unit 126b, so as to monitor whether a restart command is inputted to the restart command input device 126, that is, whether the restart button 126a of the restart command input device 126 is pressed. To be more specific, the accumulation/deceleration request monitoring unit 10 determines that the restart button 126a is pressed if the restart signal is transmitted from the restart signal transmission unit 126b, and determines that the restart button 126a is not pressed if the restart signal is not transmitted from the restart signal transmission unit 126b. In response to the input of the restart command to the restart command input device 126 after the emergency stop command is inputted to the stop command input device 124, that is, the transmission of the restart signal from the restart signal transmission unit 126b after the emergency stop signal is transmitted from the stop signal transmission unit 124b, and the acceleration/deceleration request monitoring unit 10 outputs the restart request to the later mentioned moving distance calculation unit 22.

The accumulation/deceleration request monitoring unit 10 also detects a velocity change signal transmitted from the velocity change signal transmission unit 128b, so as to monitor whether an acceleration command or deceleration command is inputted to the override device 128, that is, whether the override dial 128a is rotated. To be more specific, the acceleration/deceleration request monitoring unit 10 determines that the override dial 128a is rotated if the velocity change signal is transmitted from the velocity change signal transmission unit 128b, and determines that the override dial 128a is not rotated if the velocity change signal is not transmitted from the velocity change signal transmission unit 128b. In response to the reception of the velocity change signal transmitted from the velocity change signal transmission unit 128b, the acceleration/deceleration request monitoring unit 10 outputs the velocity change request, including the information on the override coefficient included in the velocity change signal, to the later mentioned moving distance calculation unit 22.

The computing unit 12 respectively calculates, on the basis of the processing path of the NC program stored in the storage unit 4, a moving distance of each support 102b, 106a, 108a and 110a in a corresponding moving axis direction (X axis direction, Y axis direction, W axis direction and Z axis direction) per set unit time, depending on whether a special command is inputted to the special command input device 122, and depending on the type of the special command.

In concrete terms, if a special command is not inputted to the special command input device 122, the computing unit 12 respectively calculates, on the basis of the processing path, a moving distance of each support 102b, 106a, 108a and 110a in the corresponding movement axis direction per set unit time. If a special command is inputted to the special command input device 122, on the other hand, the computing unit 12 changes, according to the inputted special command, the length of the set unit time from the length in a state immediately before the input of the special command to the special command input device 122 to a length in accordance with the change of velocity of the movement target object instructed by the special command, and calculates, on the basis of the processing path, a moving distance of each support 102b, 106a, 108a and 110a in a corresponding movement axis direction per set unit time of which length has been changed.

To be more specific, if the emergency stop command is inputted to the stop command input device 124, the computing unit 12 calculates accordingly the set unit time in the deceleration stop period based on a stop period unit time change function, and calculates, on the basis of the processing path, a moving distance of each support 102b, 106a, 108a and 110a in the corresponding movement axis direction per set unit time thus calculated. The deceleration stop period is time required from the start of the deceleration operation to urgently stop the movement target object to the actual stop of the movement target object. The stop period unit time change function is a function to indicate a change of the length of the set unit time (deceleration period set unit time), that is, a decrease of the length of the set unit time from a length in a state immediately before the input of the emergency stop command to the stop command input device 124 in the deceleration stop period to the length 0.

If the restart command is inputted to the restart command input device 126 after the emergency stop command is inputted to the stop command input device 124, the computing unit 12 calculates accordingly the set unit time in the restart period based on a restart period unit time change function, and calculates, on the basis of the processing path, a moving distance of each support 102b, 106a, 108a and 110a in the corresponding movement axis direction per set unit time thus calculated. The restart acceleration period is time required from the start of restarting process of the stopping movement target object to reaching the movement velocity corresponding to the override coefficient being set at this moment via acceleration. The restart period unit time change function is a function to indicate a change of the length of the set unit time (acceleration period set unit time), that is, an increase of the length of the set unit time from the length 0 to the length corresponding to the override coefficient at the point of the restart during the restart acceleration period.

If the acceleration command is inputted to the override device 128, the computing unit 12 calculates the set unit time in the acceleration period based on an acceleration period unit time change function, and calculates, on the bases of the processing path, a moving distance of each support 102b, 106a, 108a and 110a in the corresponding movement axis direction per set unit time thus calculated. The acceleration period is time required from the start of acceleration of the movement target object in response to the acceleration command to reaching the movement velocity corresponding to the acceleration rate (override coefficient) included in the acceleration command via acceleration. The acceleration period unit time change function is a function to indicate a change of the length of the set unit time (acceleration period set unit time), that is, an increase of the set unit time from the length in the state immediately before the input of the acceleration command to the override device 128 to the length corresponding to the acceleration rate included in the acceleration command during the acceleration period.

If the deceleration command is inputted to the override device 128, the computing unit 12 calculates accordingly the set unit time in the deceleration period based on a deceleration period unit time change function, and calculates, on the basis of the processing path, a moving distance of each support 102b, 106a, 108a and 110a in the corresponding movement axis direction per set unit time thus calculated. The deceleration period is time required from the start of deceleration of the movement target object in response to the deceleration command to reaching the movement velocity corresponding to the deceleration rate (override coefficient) included in the deceleration command via deceleration. The deceleration period unit time change function is a function to indicate a change of the length of the set unit time (deceleration period set unit time), that is, a decrease of the set unit time from the length in the state immediately before the input of the deceleration command to the override device 128 to the length corresponding to the deceleration rate included in the deceleration command during the deceleration period.

The computing unit 12 sets each of the above mentioned set time as a unit time that is different from the reference unit time which is the reference of driving of each driving device 102c, 106b, 108b and 110b, and calculates a moving distance of each support 102b, 106a, 108a and 110a per set unit time.

This computing unit 12 has a movement command path deriving unit 20 and a moving distance calculation unit 22.

The movement command path deriving unit 20 determines a movement command path path (T) of each movement axis on the basis of the processing path. The movement command path path (T) indicates a position for each support 102b, 106a, 108a and 110a which should move in the corresponding movement axis direction as set time T elapses. The set time T is time that is set separately from the reference time.

As Fig. 3 shows, the movement command path deriving unit 20 has a program read unit 24, a curved surface interpolation unit 26, a movement command path computing unit 28, an acceleration/deceleration computing unit 30, and a local acceleration/deceleration filter 32.

The program read unit 24 reads a processing path (tool path) from the NC program stored in the storage unit 4. The processing path read by the program read unit 24 is stored in the memory 5.

The curved surface interpolation unit 26 performs interpolation operation if necessary, so that the processing path becomes a smooth path. If the processing path is interpolated by the curved surface interpolation unit 26, this interpolated processing path is stored in the memory 5.

The movement command path computing unit 28 calculates a movement command path, that is, a movement component in each movement axis direction on the basis of the processing path stored in the memory 5. The calculated movement command path in each movement axis direction is stored in the memory 5.

The acceleration/deceleration computing unit 30 performs calculation of acceleration/deceleration for each movement command path for each movement axis stored in the memory 5, according to the acceleration/deceleration conditions for each movement axis, that is, according to an allowable acceleration and allowable jerk for each movement axis, and calculates a movement command path path (T) for each movement axis as a function of the set time T. The calculated movement command path path (T) is stored in the memory 5.

The local acceleration/deceleration filter 32 interpolates locally and smoothly only the portion, out of the movement command path path (T), indicating a rapid acceleration/deceleration that could cause a mechanical shock to the machine tool. The portion of which velocity change is originally smooth and does not generate mechanical shock, out of the movement command path path (T) interpolated by the local acceleration/deceleration filter 32, has not been interpolated, so no error from the path instructed by the processing command is generated in this portion.

Based on the movement command path path (T) determined by the movement command path deriving unit 20, the moving distance calculation unit 22 calculates a moving distance of each support 102b, 106a, 108a and 110a in the corresponding movement axis direction per set unit time, depending on whether a special command is inputted to the special command input device 122, and depending on the type of the special command.

In concrete terms, if the emergency stop command is inputted to the stop command input device 124, the moving distance calculation unit 22 calculates the deceleration stop period and the stop period unit time change function based on the allowable acceleration and allowable jerk of the movement target object in a combined movement direction of each movement axis direction and set unit time in the state immediately before the input of the emergency stop command, and also calculates a deceleration period set unit time in the deceleration stop period based on the calculated deceleration stop period and stop period unit time change function, and calculates, on the basis of the movement command path path (T), a moving distance of each support 102b, 106a, 108a and 110a in the corresponding movement axis direction per deceleration period set unit time thus calculated respectively.

If the restart command is inputted to the restart command input device 126 after the emergency stop command is inputted to the stop command input device 124, the moving distance calculation unit 22 calculates accordingly the restart acceleration period and the restart period unit time change function based on the allowable acceleration and the allowable jerk of the movement target object and an override coefficient at the moment of input of the restart command, and calculates the acceleration period set unit time in the calculated restart acceleration period based on the calculated restart acceleration period and the restart period unit time change function, and calculates, on the basis of the command path path (T), the moving distance of each support 102b, 106a, 108a and 110a in the corresponding movement axis direction per acceleration period set unit time thus calculated respectively.

If the acceleration command is inputted to the override device 128, the moving distance calculation unit 22 calculates accordingly the acceleration period and the acceleration period unit time change function based on the allowable acceleration and the allowable jerk of the movement target object, the set unit time at the moment of the input of the acceleration command, and the acceleration rate (override coefficient) included in the acceleration command, and calculates the acceleration period set unit time during the acceleration period based on the calculated acceleration period and acceleration period unit time change function, and calculates, on the basis of the command path path (T), the moving distance of each support 102b, 106a, 108a and 110a in the corresponding movement axis direction per acceleration period set unit time thus calculated respectively.

If the deceleration command is inputted to the override device 128, the moving distance calculation unit 22 calculates accordingly the deceleration period and the deceleration period unit time change function based on the allowable acceleration and the allowable jerk of the movement target object, the set unit time at the moment of the input of the deceleration command, and the deceleration rate (override coefficient) included in the deceleration command, and calculates the deceleration period set unit time during the deceleration period based on the calculated deceleration period and deceleration period unit time change function, and calculates, on the basis of the command path path (T), the moving distance of each support 102b, 106a, 108a and 110a in the corresponding movement axis direction per deceleration period set unit time thus calculated respectively.

In accordance with the moving distance of each support 102b, 106a, 108a and 110a calculated by the moving distance calculation unit 22 of the computing unit 12, the drive control unit 14 causes each driving device 102c, 106b, 108b and 110b to transfer corresponding each support 102b, 106a, 108a or 110a in the corresponding movement axis direction. In concrete terms, the drive control unit 14 actuates each driving device 102c, 106b, 108b and 110b every time the reference unit time elapses, so as to perform control to cause each driving device 102c, 106b, 108b and 110b to transfer the corresponding support 102b, 106a, 108a or 110a in the corresponding movement axis direction for the amount of the moving distance per set unit time, calculated by the moving distance calculation unit 22 of the computing unit 12. The drive control unit 14 executes this control by transmitting a servo command pulse to each driving device 102c, 106b, 108b and 110b.

Now a numerical control process by the numerical control apparatus 2 of the present embodiment will be described.

First, the movement command path deriving unit 20 of the computing unit 12 derives the movement command path path (T) for each movement axis on the basis of the processing path (step S2 in Fig. 4). The data on the derived movement command path path (T) is stored in the memory 5.

Then, the moving distance calculation unit 22 determines whether data on the movement command path is stored in the memory 5 (step S4). If it is determined that the data on the movement command path is not stored in the memory 5, the moving distance calculation unit 22 performs the determination in step S4 again. If it is determined that the data on the movement command path is stored in the memory 5, on the other hand, the moving distance calculation unit 22 initializes the set time T to 0, and initializes the set unit time $\Delta T$ to 1 (step S6).

Then, the moving distance calculation unit 22 initializes a value dg to 0, where the value dg is generated by differentiating the set time function T (t) with the reference time t to acquire a value g(t), and further differentiating this value g(t) with the reference time t (step S8). The set time function T (t) indicates a correspondence between the reference time t and the set time T, and expresses the set time T as a function with respect to the reference time t.

Then, based on the data on the movement command path path (T), the moving distance calculation unit 22 calculates a unit time moving distance dP [axis] for each movement axis per set unit time $\Delta T$ using the following Expression (1) respectively (step S10).

$$dP\,[axis] = path\,(T + \Delta T)\,[axis] - path\,(T)\,[axis] \qquad (1)$$

Then, based on the unit time moving distance dP [axis] for each movement axis calculated above, the moving distance calculation unit 22 calculates the current movement velocity V of the movement target object in the combined movement direction (hereafter called "combined movement velocity V") using the following Expression (2) (step S11). The combined movement direction is a direction generated by combining each movement axis direction.

$$V = |dP\ [\ ]|/\Delta T \qquad (2)$$

In Expression (2), dP [ ] is a moving distance of the movement target object in the combined movement direction. The value of dP [ ] is determined by the moving distance calculation unit 22 combining the unit time moving distance dP [axis] for each movement axis.

Then, the drive control unit 14 actuates each driving device 102c, 106b, 108b and 110b according to the unit time moving distance dP [axis] calculated by the moving distance calculation unit 22 (step S12). In this case, the drive control unit 14 creates, for each movement axis, a servo command pulse, which instructs to transfer each support 102b, 106a, 108a and 110ad by the unit time moving distance dP [axis] per reference unit time (1 mm sec. in this embodiment), and outputs the created servo command pulse for each movement axis to the corresponding driving device 102c, 106b, 108b or 110b respectively. Thereby, the servo motor of each driving device 102c, 106b, 108b and 110b transfers the corresponding support 102b, 106a, 108a or 110a for the unit time moving distance dP [axis] per reference unit time, according to the servo command pulse from the drive control unit 14.

Then, the moving distance calculation unit 22 determines whether processing for all the period of the movement command path path (T) stored in the memory 5 is ended (step S 14). In concrete terms, the data on the movement command path path (T) stored in the memory 5 is sequentially computed for each set unit time $\Delta T$, as mentioned above, and thereby the unit time moving distance dP [axis] is sequentially determined, therefore in step S 14, it is determined whether this computing is ended for all the periods of the movement command path path (T) stored in the memory 5. If the moving distance calculation unit 22 determines that processing is ended for all the periods of the movement command path stored in the memory 5, the numerical control processing by the numerical control apparatus 2 ends.

In parallel with the above mentioned computing by the computing unit 12, the acceleration/deceleration request monitoring unit 10 monitors whether a special command is inputted to the special command input device 122 according to the process shown in Fig. 5.

In concrete terms, the acceleration/deceleration request monitoring unit 10 determines whether the machine tool is in the continuous operation state (step S102). If it is determined that the machine tool is in the continuous operation state, then the acceleration/deceleration request monitoring unit 10 determines whether the emergency stop button 124a is pressed (step S104).

If an emergency stop signal transmitted from the stop signal transmission unit 124b is detected and thereby it is determined that and the emergency stop button 124a is pressed, the acceleration/deceleration request monitoring unit 10 issues an emergency stop request (step S106), and then executes the processing in step S52 again. If it is determined that the emergency stop button 124a is not pressed, on the other hand, then the acceleration/deceleration request monitoring unit 10 determines whether the override dial 128a is rotated (step S108).

If a velocity change signal transmitted from the velocity change signal transmission unit 128b is detected and thereby it is determined that the override dial 128a is rotated, the acceleration/deceleration request monitoring unit 10 issues a velocity change request which includes information on an override coefficient k according to the rotation direction and rotation amount of the override dial 128a (step S110), then the processing in step S 102 is executed again. If it is determined that the override dial 128a is not rotated, on the other hand, the acceleration/deceleration request monitoring unit 10 executes the processing in step S 102 again, without issuing the velocity change request.

If it is determined that the machine tool is not in the continuous operation state in step S 102, the acceleration/deceleration request monitoring unit 10 determines whether the transfer of each support 102b, 106a, 108a and 110ad by each driving device 102c, 106b, 108b and 110b is stopping in response to the emergency stop request (step S112).

If it is determined that the transfer of each support 102b, 106a, 108a and 110ad is stopping, the acceleration/deceleration request monitoring unit 10 determined whether the restart button 126a is pressed (step S114). Here, if a restart signal transmitted from the restart signal transmission unit 126b is detected and thereby it is determined that the restart button 126a is pressed, the acceleration/deceleration monitoring unit 10 issues the restart request (step S 116), then executes the processing in step S102 again. If it is determined that the restart button 126a is not pressed, on the other hand, the acceleration/deceleration request monitoring unit 10 executes the processing in step S 102 again without issuing the restart request.

If it is determined that the processing is not ended for all the periods of the movement command path path (T) stored in the memory 5 in the determination in step S 14, then the moving distance calculation unit 22 determines whether the emergency stop request is issued from the acceleration/deceleration request monitoring unit 10 (step S16 in Fig. 4). If it is determined that the emergency stop request is issued, the moving distance calculation unit 22 executes the emergency stop process shown in Fig. 6.

In concrete terms, the moving distance calculation unit 22 temporarily stores the current value of the combined movement velocity V of the movement target object in the memory 5 (step S22), then calculates the deceleration stop period (time) and the stop period unit time change function g(t) (step S24). Here the moving distance calculation unit 22 calculates the deceleration stop period (time) and the stop period unit time change function g(t) which satisfy the following conditions: a value gs of the stop period unit time change function g(t) in the beginning of the deceleration stop period (time) is the same as the set unit time $\Delta T$; a value ge of the stop period unit time change function g(t) in the end of the deceleration stop period (time) is 0; and the combined movement velocity in the beginning of the deceleration stop period (time) is the same as the combined movement velocity V. The calculation process of the deceleration stop period (time) and the stop period unit time change function g(t) is shown in Fig. 9. Fig. 9 depicts a processing that is applicable to both the calculation of the restart acceleration period (time) and the restart period unit time change function g(t) in the later mentioned restart process, and the calculation of the velocity change period (time) and the velocity change period unit time change function g(t) in the velocity change process. In other words, in the operation involving the velocity change of the movement target object which is performed in response to a special command which is inputted to the special command input device 122, the moving distance calculation unit 22 calculates, in a common calculation process, the period (time) required for the operation involving the velocity change and the unit time change function g(t) which indicates the change of the unit time in this period (time).

If the movement target object is moving in a constant velocity in the beginning of the deceleration stop period (time) (a moment when the moving distance calculation unit 22 received the emergency stop request), the stop period unit time change function g(t) is expressed by a curve shown in Fig. 10, for example. If the movement target object is being accelerated in the beginning of the deceleration stop period (time), the stop period unit time change function g(t) is expressed by a curve shown in Fig. 11, for example, and if the movement target object is decelerating in the beginning of the deceleration stop period (time), the stop period unit time change function g(t) is expressed by a curve shown in Fig. 12, for example.

To calculate the deceleration stop period (time) and the stop period unit time change function g(t), the moving distance calculation unit 22 first determines a second-order differential value j of the stop period unit time change function g(t), and an inclination a of a first-order differential of the stop period unit time change function g(t) (step S42). In this case, the second-order differential value j is determined by the following Expression (3), and the inclination a of the first-order differential is determined by the following Expression (4).

$$j = J/V \qquad (3)$$

$$a = A/V \qquad (4)$$

J denotes an allowable jerk for the movement target object in the combined movement direction, and A denotes an allowable acceleration for the movement target object in the combined movement direction. The values of J and A are parameters that are set for calculating (time) and g(t) in this embodiment. The value J is set to a value that is about half of the allowable jerk in the acceleration/deceleration conditions specified based on the mechanical characteristics of the machine tool, and the value A is set to a value that is about half of the allowable acceleration in the acceleration/deceleration conditions specified based on the mechanical characteristics of the machine tool.

Then, the moving distance calculation unit 22 determines whether the value dg of first-order differentiation of the stop period unit time change function g(t) with respect to the reference time t at t = 0 is 0 or more (step S44). If it is determined that the value dg is 0 or more, the moving distance calculation unit 22 sets the second-order differential value j1, in the first half portion of the quadratic curve expressed by the stop period unit time change function g(t), to -j (step S46). If it is determined that the value dg is smaller than 0, on the other hand, the moving distance calculation unit 22 sets the second-order differential value j 1 to j (step S48).

Then, the moving distance calculation unit 22 tentatively calculates a relative position (t0, E0) of the peak of the first half portion of the quadratic curve of the stop period unit time change function g(t) with respect to the start point of the stop period unit time change function g(t) in the deceleration stop period (time), using the following Expressions (5) and (6), and tentatively calculates the change amount E of the value of the stop period unit time change function g (t) in a range from the peak of the first half portion of the quadratic curve to the endpoint of the latter half portion of the quadratic curve, using the following Expression (7) (step S50).

$$t0 = -dg/j1 \qquad (5)$$

$$E0 = (dg/2) \times t0 \qquad (6)$$

$$E = ge - gs - E0 \qquad (7)$$

Then, the moving distance calculation unit 22 determines whether the change amount E of the value of the stop period unit time change function g(t) is 0 or more (step S52). If it is determined that the change amount E is 0 or more, the moving distance calculation unit 22 sets the second-order differential value j 1 of the first half portion of the quadratic curve of the stop period unit time change function g(t) to j, and sets the second-order differential value j2 of the latter half portion of the quadratic curve of the stop period unit time change function g(t) to -j (step S54). If it is determined that the change amount E is smaller than 0, on the other hand, the moving distance calculation unit 22 sets the second-order differential value j1 of the first half portion of the quadratic curve to -j, and sets the second-order differential value j2 of the latter half portion of the quadratic curve to j, and sets the inclination a of the first-order differential of g(t) reversing the + and - signs (step S56).

Then, the moving distance calculation unit 22 recalculates the relative position (t0, E0) of the peak of the first half portion of the quadratic curve with respect to the start point of the quadratic curve of the stop period unit time change function g(t) using the above Expressions (5) and (6), and recalculates the change amount E of g(t) in a range from the peak of the first half portion of the quadratic curve to the endpoint of the latter half portion, using the above Expression (7) (step S58).

Then, the moving distance calculation unit 22 calculates the value gu of g(t) at the peak of the first half portion of the quadratic curve of the stop period unit time change function g(t), the time t1 required from the start point to the inflection point of the quadratic curve, the time t2 required from the inflection point to the endpoint of the quadratic curve, the change amount G1 of g(t) in a range from the start point to the inflection point of the quadratic curve, the change amount G2 of g(t) in a range from the inflection point to the endpoint of the quadratic curve, and the change amount G of g(t) in a range from the start point to the endpoint of the quadratic curve respectively (step S60). In this case, the moving distance calculation unit 22 calculates gu using the following Expression (8), calculates t1 using the following Expression (9), and calculates t2 using the following Expression (10). The moving distance calculation unit 22 also calculates G1 using the following Expression (11), calculates G2 using the following Expression (12), and calculates G using the following Expression (13).

$$gu = gs + E0 \qquad (8)$$

$$t1 = a/j1 \qquad (9)$$

$$t2 = -a/j2 \qquad (10)$$

$$G1 = (a/2) \times t1 \qquad (11)$$

$$G2 = (a/2) \times t2 \qquad (12)$$

$$G = G1 + G2 \qquad (13)$$

Then, the moving distance calculation unit 22 determines whether the absolute value |E| of the change amount of g(t) in the range from the peak of the first half portion to the endpoint of the latter half portion in the quadratic curve is not less than the absolute value |G| of the change amount of g(t) in the range from the start point to the endpoint of the quadratic curve (step S62). If the absolute value |E| is not less than the absolute value |G|, this corresponds to the case when a linear portion exists between the first half curved portion and the latter half curved portion of the quadratic curve, as shown in Fig. 13. Therefore if it is determined that the absolute value |E| is not less than the absolute value |G|, the moving distance calculation unit 22 determines the stop period unit time change function g(t) respectively for three blocks of the quadratic curve: the first half curved portion $0 \leq t \leq T1$; the linear portion $T1 < t < T2$; and the latter half curved portion $T2 \leq t \leq time$ (step S64).

In concrete terms, the moving distance calculation unit 22 determines the stop period unit time change function g(t) in the $0 \leq t \leq T1$ block using the following Expression (14).

$$g(t) = gu + (j1/2) \times (t - t0)^2 \qquad (14)$$

The moving distance calculation unit 22 determines the stop period unit time change function g(t) in the $T1 < t < T2$ block using the following Expression (15).

$$g(t) = gu + G1 + a \times (t - T1) \qquad (15)$$

The moving distance calculation unit 22 determines the stop period unit time change function g(t) in the $T2 \leq t \leq time$ block using the following Expression (16).

$$g(t) = ge + (j2/2) \times (t - time)^2 \qquad (16)$$

Here, T1 is time required from the start point of the quadratic curve to the first inflection point (endpoint of the first half curved portion), and is determined using the following Expression (17). T2 is time required from the start point of the quadratic curve to the second inflection point (endpoint of the linear portion), and is determined using the following Expression (18). The deceleration stop period (time) is time required from the start point to the endpoint of the quadratic curve, and is determined using the following Expression (19).

$$T1 = t0 + t1 \qquad (17)$$

$$T2 = T1 + (E - G)/a \qquad (18)$$

$$time = T2 + t2 \qquad (19)$$

If the absolute value |E| is less than the absolute value |G|, on the other hand, this corresponds to the case when a linear portion does not exist between the first half curved portion and the latter half curved portion of the quadratic curve, and these curved portions are continuous. Therefore, if it is determined that the absolute value |E| is less than the absolute value |G|, the moving distance calculation unit 22 determines the stop period unit time change function g(t) respectively for two blocks of the quadratic curve: the first half curved portion $0 \leq t \leq T1$; and the latter half curved portion $T1 < t \leq time$ (step S65).

In concrete terms, the moving distance calculation unit 22 determines the stop period unit time change function g(t) in the $0 \leq t \leq T1$ block using the following Expression (20).

$$g(t) = gu + (j1/2) \times (t - t0)^2 \qquad (20)$$

The moving distance calculation unit 22 determines the stop period unit time change function g(t) in the T1 < t ≤ time block using the following Expression (21).

$$g(t) = ge + (j2/2) \times (t - time)^2 \qquad (21)$$

In this case, the deceleration stop period (time) is determined using the following Expression (22).

$$time = T1 + t2 \qquad (22)$$

Here, T1 is time required from the start point to the inflection point (endpoint of the first half curved portion) of the quadratic curve, and is determined using the following Expression (23).

$$T1 = t0 + t1 \qquad (23)$$

t1 is determined using the following Expression (24), and t2 is determined using the following Expression (25).

$$t1 = [2 \times E \times j2/\{j1 \times (j2 - j1)\}]^{1/2} \qquad (24)$$

$$t2 = -j1/j2 \times t1 \qquad (25)$$

As described above, the stop period unit time change function g(t) and the deceleration stop period (time) are determined.

Then, the moving distance calculation unit 22 initially sets the reference time t to 0 (step S26 in Fig. 6).

Then, the moving distance calculation unit 22 increments the reference time t by 1 (step S28), and calculates a deceleration period set unit time dT2, which is a unit time of the set time T in this emergency stop process (deceleration stop period (time)), based on the stop period unit time change function g(t) determined as mentioned above (step S30). The length of the deceleration period set unit time dT2 calculated here is less than the length of the set unit time ΔT in a state immediately before the emergency stop request is issued from the acceleration/deceleration request monitoring unit 10, that is, a state immediately before pressing the emergency stop button 124a of the stop command input device 124. The moving distance calculation unit 22 calculates the deceleration period set unit time dT2 by substituting the reference time t incremented in step S28 in the stop period unit time change function g(t).

Now the moving distance calculation unit 22 calculates the moving distance dP [axis] for each movement axis per deceleration period set unit time dT2, that is, the moving distance dP [axis] for each movement axis for the period between the set time T to T + dT2, using the following Expression (27) (step S32).

$$dP\ [axis] = path\ (T + dT2)\ [axis] - path\ (T)\ [axis] \qquad (27)$$

The moving distance dP [axis] for each movement axis per deceleration period set unit time dT2 determined like this is less than the moving distance for each movement axis per set unit time ΔT in the state immediately before the emergency stop request is issued from the acceleration/deceleration request monitoring unit 10.

Then, just like step S12, the drive control unit 14 actuates each driving device 102c, 106b, 108b and 110b according to the moving distance dP [axis] for each movement axis per deceleration period set unit time dT2 calculated by the moving distance calculation unit 22, and thereby causes the driving device 102c, 106b, 108b and 110b to transfer the corresponding support 102b, 106a, 108a or 110a for the moving distance dP [axis] for the corresponding movement axis per reference unit time (step S34).

Then, the moving distance calculation unit 22 updates the set time T by adding the deceleration period set unit time dT2 calculated in step S30 to the set time T (step S36).

Then, the moving distance calculation unit 22 determines whether the reference time t is not less than the deceleration stop period (time) (step S38). If the reference time t is not less than the deceleration stop period (time), the movement of the movement target object has already been stopped. If it is determined that the reference time t is not less than the deceleration stop period (time), the moving distance calculation unit 22 reads the value of the combined movement velocity V stored in the memory 5 (step S40). If the restart command is inputted to the restart command input device 126 thereafter, the restart process to restart movement of the movement target object (see Fig. 7) is executed. If it is determined that the reference time t does not exceed the deceleration stop period (time) in step S38, on the other hand, the moving distance calculation unit 22 executes step S28 and later processing again.

Then, the restart process of the movement target object will be described. In the restart process, the moving distance calculation unit 22 determines whether the restart request is outputted from the acceleration/deceleration request monitoring unit 10 (step S68). If it is determined that the restart request is not outputted from the acceleration/deceleration request monitoring unit 10, the moving distance calculation unit 22 repeatedly executes the determination in step S68. If it is determined that the restart request is outputted from the acceleration/deceleration request monitoring unit 10, on the other hand, then the moving distance calculation unit 22 calculates the restart acceleration period (time) and the restart period unit time change function g(t) (step S70). Here the moving distance calculation unit 22 calculates the restart acceleration period (time) and the restart period unit time change function g(t) which satisfy the following conditions: a value gs of the restart period unit time change function g(t) in the beginning of the restart acceleration period (time) is 0; a value ge of the restart period unit time change function g(t) in the end of the restart acceleration period (time) is the same as the override coefficient k at this point; and the combined movement velocity in the end of the restart acceleration period (time) is the same as the combined movement velocity V. The calculation process of the restart acceleration period (time) and the restart period unit time change function g(t) is the same as the above mentioned calculation process of the deceleration stop period (time) and the stop period unit time change function g(t) (steps S42 to S65 in Fig. 9). In this calculation process, both t0 and E0 are 0, and dg is 0.

If the absolute value |E| of the change amount of g(t) in the block, from the peak of the first half quadratic curve expressed by the restart period unit time change function g(t) to the endpoint of the latter half quadratic curve, is not less than the absolute value |G| of the change amount of g(t) in the restart acceleration period (time), the restart period unit time change function g(t) is expressed by a curve shown in Fig. 14, where a linear portion exists between the first half curved portion and the latter half curved portion, and if the absolute value |E| is less than the absolute value |G|, the restart period unit time change function g(t) is expressed by a curve shown in Fig. 15, where the first half curved portion and the latter half curved portion are continuous without a linear portion therebetween.

After calculating the restart acceleration period (time) and the restart period unit time change function g(t), the moving distance calculation unit 22 executes steps S72 to S84 in Fig. 7 in the same manner as the above mentioned steps S26 to S38 in Fig. 6. In this case, in step S76, the moving distance calculation unit 22 calculates the acceleration period set unit time dT2 based on the restart period unit time change function g(t) calculated in step S70, and in step S78, the moving distance calculation unit 22 calculates the moving distance dP [axis] for each movement axis per acceleration period set unit time dT2 calculated above. By executing the above restart process, the stopping movement target object restarts movement, and accelerates up to the velocity corresponding to the current override coefficient k.

If it is determined that the reference time t is not less than the restart acceleration period (time) in step S84, the moving distance calculation unit 22 executes step S8 and later processing in Fig. 4 again.

If it is determined that the emergency stop request is not issued from the acceleration/deceleration request monitoring unit 10 in step S16, the moving distance calculation unit 22 determines whether the velocity change request is issued from the acceleration/deceleration request monitoring unit 10 thereafter (step S 18).

If it is determined that the velocity change request is issued from the acceleration/deceleration request monitoring unit 10, the moving distance calculation unit 22 executes the velocity change process for the movement target object shown in Fig. 8.

In concrete terms, the moving distance calculation unit 22 calculates the velocity change period (time) and the velocity change period unit time change function g(t) (step S86). In this case, the moving distance calculation unit 22 calculates the acceleration change period (time) and the acceleration change period unit time change function g(t) which satisfy the following conditions: a value gs of the velocity change period unit time change function g(t) in the beginning of the velocity change period (time) is the same as the set unit time $\Delta T$; a value ge of the velocity change period unit time change function g(t) in the end of the velocity change period (time) is the same as the override coefficient k after the velocity is changed; and the combined movement velocity in the beginning of the velocity change period (time) is the same as the combined movement velocity V.

The velocity change period (time) is included in the concept of the acceleration period of the present invention if the acceleration command is inputted to the override device 128, and is included in the concept of the deceleration period of the present invention if the deceleration command is inputted to the override device 128. The velocity change period unit time change function g(t) is included in the concept of the acceleration period unit time change function of the present invention if the acceleration command is inputted to the override device 128, and is included in the deceleration period unit time change function of the present invention if the deceleration command is inputted to the override device 128.

If the movement target object is moving at a constant velocity in the beginning of the velocity change period (time) (a moment when the moving distance calculation unit 22 received the velocity change request), the velocity change period unit time change function g(t) to accelerate the movement target object is expressed by a curve shown in Fig. 16, for example. If the movement target object is accelerating in the beginning of the velocity change period (time), the velocity change period unit time change function g(t) to further accelerate the movement target object is expressed by a curve shown in Fig. 17. If the movement target object is decelerating in the beginning of the velocity change period (time), the velocity change period unit time change function g(t) to decelerate the movement target object is expressed by a curve shown in Fig. 18.

If the movement target object is moving at a constant velocity in the beginning of the velocity change period (time) (a moment when the moving distance calculation unit 22 received the velocity change request), the velocity change period unit time change function g(t) to decelerate the movement target object is expressed by a curve shown in Fig. 19, for example. If the movement target object is accelerating in the beginning of the velocity change period (time), the velocity change period unit time change function g(t) to decelerate the movement target object is expressed by a curve shown in Fig. 20. If the movement target object is decelerating in the beginning of the velocity change period (time), the velocity change period unit time change function g(t) to further decelerate the movement target object is expressed by a curve shown in Fig. 21.

Fig. 16 to Fig. 21 all correspond to the case when the absolute value |E| of the change amount of the velocity change period unit time change function g(t) in the block from the peak of the first half quadratic curve to the endpoint of the latter half quadratic curve expressed by g(t) is less than the absolute value |G| of the change amount of g(t) in the velocity change period (time), and in this case, the velocity change period unit time change function g(t) is expressed by a curve where the first half curved portion and the latter half curved portion are continuous without the linear portion therebetween. If the absolute value |E| is not less than the absolute value |G|, on the other hand, the velocity change period unit time change function g(t) is expressed by a curve where the first half curved portion and the latter half curved portion are connected via a linear portion.

After calculating the velocity change period (time) and the velocity change period unit time change function g(t), the moving distance calculation unit 22 sets the reference time t to 0 (step S88), then increments the reference time t by 1 (step S89).

Then, the moving distance calculation unit 22 calculates the set unit time $\Delta T$ based on the velocity change period unit time change function g(t) calculated in step S86 (step S90). This set unit time $\Delta T$ is determined by substituting the reference time t incremented in step S89 in the velocity change period unit time change function g(t).

Then, the moving distance calculation unit 22 calculates, in the same manner as step S 10, the unit time moving distance dP [axis] for each movement axis per set unit time $\Delta T$ calculated above (step S91).

Then, based on the unit time moving distance dP [axis] for each movement axis calculated in step S91, the moving distance calculation unit 22 calculates the current combined movement velocity V of the moving target object (step S92). The method for calculating the combined movement velocity V is the same as the above mentioned method for calculating the combined movement velocity V in step S 11.

Then in the same manner as step S12, the drive control unit 14 actuates each driving device 102c, 106b, 108b and 110b according to the moving distance dP [axis] calculated in step S91 (step S93). Then the moving distance calculation unit 22 updates the set time T by adding the set unit time $\Delta T$ calculated in step S90 to the set time T (step S94).

Then the moving distance calculation unit 22 calculates dg by differentiating the velocity change period unit time change function g(t) determined in step S86 by the reference time t (step S95).

Then the moving distance calculation unit 22 determines whether the reference time t is not less than the velocity change period (time). If it is determined that the reference time t is not less than the velocity change period (time), the moving distance calculation unit 22 executes the process in step S8 and later again. If it is determined that the reference time t does not elapse the velocity change period (time), on the other hand, then the moving distance calculation unit 22 determines, in the same manner as step S16, whether the emergency stop request is issued from the acceleration/deceleration request monitoring unit 10 (step S97).

If the moving distance calculation unit 22 determines that the emergency stop request is issued from the acceleration/deceleration request monitoring unit 10, the emergency stop process in steps S22 to S38 is executed. If it is determined that the emergency stop request is not issued from the acceleration/deceleration request monitoring unit 10, the moving distance calculation unit 22 determines, in the same manner as step S 18, whether the velocity change request is issued from the acceleration/deceleration request monitoring unit 10 (step S98). If the moving distance calculation unit 22 determines here that the velocity change request is issued from the acceleration/deceleration request monitoring unit 10, the velocity change process in step S86 and later is executed again. If the moving distance calculation unit 22 determines that the velocity change request is not issued from the acceleration/deceleration request monitoring unit 10, on the other hand, the process in step S89 and later is executed again.

If it is determined that the velocity change request is not issued from the acceleration/deceleration request monitoring unit 10 in step S 18, the moving distance calculation unit 22 updates the set time T by adding the set unit time ΔT to the set time T (step S20). Then the process in step S 10 and later is executed again.

In this way, the numerical control process is executed by the numerical control apparatus 2 of the present embodiment.

As described above, according to the present embodiment, when the transfer device 102, 106, 108 or 110 executes irregular operation involving velocity change of the movement target object (emergency stop, acceleration after restart, and acceleration/deceleration of the movement target object during movement), the length of the set unit time, which is common for each movement axis direction, is changed from the length in a state immediately before the input of the special command to the special command input device 122 to the length corresponding to the velocity change instructed by the special command, and each support 102b, 106a, 108a and 110a is transferred in accordance with the moving distance in the corresponding movement axis direction of each support 102b, 106a, 108a and 110a per set unit time after the change calculated on the basis of the processing path. Therefore, the moving distance of each support 102b, 106a, 108a and 110a in each movement axis direction per set unit time after the change calculated on the basis of the processing path is a moving distance maintaining a relative positional relationship of positions in each movement axis direction specified by the processing path, and each support 102b, 106a, 108a and 110a is transferred for the moving distance in a state maintaining the relative positional relationship among positions in each movement axis direction specified by the processing path. As a result, deviation of the movement locus of the movement target object from the processing path can be prevented when each transfer device 102, 106, 108 and 110 executes the operation involving the irregular velocity change of the movement target object (emergency stop, acceleration after restart, and acceleration/deceleration of the movement target object during movement) separately from normal transfer of the movement target object performed when the workpiece 100 is processed.

According to the present embodiment, operation involving irregular velocity change of the movement target object can be executed, while preventing deviation of the movement locus of the movement target object from the processing path, simply by changing the length of the set unit time common to each movement axis direction, without performing complicated operation when a special command is inputted to the special command input device 122, unlike the case of the technique disclosed in Patent Document 1, which separately performs an operation to cancel an error generated by the acceleration/deceleration after interpolation, or the technique disclosed in Patent Document 2, which performs an acceleration/deceleration operation before interpolation. Therefore, responsiveness, from instructing the operation involving the velocity change of the movement target object by the input of a special command to the special command input device 122 to actual execution of this operation of the movement target object by each transport device, 102, 106, 108 and 110, can be improved. In concrete terms, the responsiveness, from the input of the emergency stop command to the stop command input device to each transfer device 102, 106, 108 and 110 urgently stopping the movement of the movement target object, can be improved. The responsiveness, from the input of the restart command to the restart command input device 126 to each transfer device 102, 106, 108 and 110 actually restarting the movement of the movement target object, can also be improved. Further, the responsiveness, from the input of the velocity change command to the override device 128 to each transfer device 102, 106,108 and 110 actually accelerating or decelerating the movement of the movement target object, can be improved.

According to the present embodiment, when the transfer device 102, 106, 108 or 110 executes irregular operation involving velocity change of the movement target object, a set time and a set unit time, which are different from the reference time and the reference unit time to be the reference of actuating of the driving devices 102c, 106b, 108b and 110b, are set, and a moving distance of each support 102b, 106a, 108a and 110a in the corresponding movement axis direction per that set unit time is calculated on the basis of the processing path, and thereby the moving distance to move each support 102b, 106a, 108a or 110a per reference unit time is calculated. In other words, according to the present embodiment, the moving distance of each support 102b, 106a, 108a and 110a per reference unit time, for executing irregular operation involving velocity change of the movement target object, is calculated without influencing the reference time and reference unit time to be the reference of actuating of the driving devices 102c, 106b, 108b and 110b. Therefore, operation of the movement target object involving the irregular velocity change can be executed without influencing normal driving by each driving device 102c, 106b, 108b and 110b.

The embodiments disclosed here are all illustrative, and are not intended to limit the scope of the invention. The scope of the invention is not specified by the above description of the embodiment but by Claims, and includes Claims and all modifications within the equivalent meaning and scope.

For example, the numerical control apparatus of the present invention may be applied to machine tools other than the machine tool described in the above embodiment.

The movement command path deriving unit may not necessarily include the interpolation computing unit and the acceleration/deceleration filter. In other words, the moving distance calculation unit may calculate the moving distance of each support in the corresponding movement axis direction per set unit time based on the movement command path for each movement axis which the movement command path deriving unit derived without performing the interpolation operation on the basis of the processing path of the processing command program.

The control of the transfer device by the numerical control apparatus of the present invention need not be applicable to all deceleration at emergency stop of the movement target object, acceleration at restart and acceleration/deceleration according to an override device. For example, control of the transfer device by the numerical control apparatus of the present invention may be applied only to deceleration of the movement target object at emergency stop, or control of the transfer device by the numerical control apparatus of the present invention may be applied only to acceleration at restart of the movement target object, or control of the transfer device by the numerical control apparatus of the present invention may be applied only to acceleration/deceleration of the movement target object according to an override device. The control of the transfer device by the numerical control apparatus of the present invention may be applied to any two of the following three: deceleration of the movement target object at emergency stop; acceleration at restart; and acceleration/deceleration according to an override device. In such cases, the device, to indicate the operation involving the velocity change of the movement target object to which control by the numerical control apparatus of the present invention is applied, out of the stop signal input device, restart signal input device and override device, is included in the special command input device of the present invention.

[Summary of Embodiment]

The above embodiment can be summarized as follows.

The numerical control apparatus according to the embodiment is a numerical control apparatus installed in a machine tool which includes: a plurality of transfer devices which transfer a movement target object, which is a workpiece or a tool to process the workpiece, when the workpiece is processed; and a special command input device for inputting, from outside, a special command for instructing an operation involving a velocity change of the movement target object separately from normal transfer of the movement target object performed when the workpiece is processed, each of the transfer devices including a support for supporting the movement target object, and a driving device which transfers the movement target object by transferring the support in a predetermined movement axis direction, the numerical control apparatus performing numerical control of each of the transfer devices and including: a storage unit which stores a processing command program which specifies a processing path to indicate a path where the movement target object is to move as a reference time elapses when the workpiece is processed; a computing unit which calculates, on the basis of the processing path, a moving distance of each support in the corresponding movement axis direction per set unit time; and a drive control unit which causes each driving device to transfer the support corresponding to that driving device in accordance with the moving distance of each support calculated by the computing unit, wherein in response to the input of the special command to the special command input device, the computing unit changes a length of the set unit time from a length in the state immediately before the input of the special command to a length corresponding to the velocity change of the movement target object instructed by the special command, and calculates, on the basis of the processing path, the moving distance of each support in the corresponding movement axis direction per set unit time of which length has been changed.

According to this numerical control apparatus, when the machine tool executes irregular operation involving velocity change of the movement target object, in response to a special command inputted to the special command input device, the length of the set unit time, which is common for each movement axis direction, is changed from the length in a state immediately before the input of the special command to the length corresponding to the velocity change instructed by the special command, and the moving distance of each support in the corresponding moving axis direction per set unit time of which length has been changed is calculated on the basis of the processing path, and each support is transferred in the corresponding movement direction in accordance with the calculated moving distance. Therefore when an operation involving an irregular velocity change of the movement target object is executed separately from the normal transfer of the movement target object performed when a workpiece is processed, deviation of the movement locus of the movement target object from the processing path can be prevented.

In concrete terms, when the length of the set unit time which is common for each movement axis direction is changed in response to the special command, as in the case of this numerical control apparatus, the moving distance of each support in the corresponding moving axis direction per set unit time calculated on the basis of the processing path, is calculated as a moving distance maintaining the relative positional relationship among each movement axis specified by the processing path. Therefore, if the corresponding support is transferred by the driving device in accordance with the calculated moving distance in each moving axis direction per set unit time, the operation involving the velocity change of the movement target object is executed in a state maintaining the relative positional relationship among each movement axis specified by the processing path. As a result, deviation of the movement locus of the movement target object from the processing path can be prevented, even if the above operation involving the irregular velocity change of the movement target object is executed.

Further, according to this numerical control apparatus, operation involving irregular velocity change of the movement target object can be executed, while preventing deviation of the movement target object from the processing path simply by changing the length of the set unit time, without performing a complicated operation when a special command is inputted to the special command input device, unlike the case of the technique disclosed in Patent Document 1, which separately performs operation to cancel an error generated by the acceleration/deceleration after interpolation, or the technique disclosed in Patent Document 2, which performs acceleration/deceleration operation before interpolation. Therefore, the responsiveness, from instructing the operation involving the velocity change of the movement target object by the input of the special command to the special command input device to actual execution of this operation involving velocity change of the movement target object, can be improved.

In the above numerical control apparatus, it is preferable that the drive control unit controls operation of each driving device so that the driving device transfers, per reference unit time which is a reference of actuating of the driving device, the corresponding support in the corresponding axis direction for the moving distance per the set unit time calculated by the computing unit, and the computing unit sets the set unit time as a unit time which is different from the reference unit time, and calculates, on the basis of the processing path, the moving distance of each support per set unit time in the corresponding movement axis direction.

According to this configuration, to perform operation of the movement target object involving the irregular velocity change, the transfer distance (moving distance) of the corresponding support transferred by each driving device in the corresponding moving axis direction per reference unit time can be calculated, and the transfer of each support in the corresponding moving axis direction in accordance with this transfer distance can be performed, without influencing the reference unit time, which is the reference of actuating of the driving device. Therefore, operation of the movement target object involving the irregular velocity change can be executed without influencing actuating of each driving device.

In the above numerical control apparatus, it is preferable that the special command input device includes a stop command input device for inputting, as the special command, an emergency stop command for urgently decelerating and stopping movement of the movement target object, and in response to the input of the emergency stop command to the stop command input device, the computing unit calculates the set unit time in a predetermined deceleration stop period, based on a stop period unit time change function, which decreases the length of the set unit time from a length in the state immediately before the input of the emergency stop command to the stop command input device to 0 during the deceleration stop period, and calculates, on the basis of the processing path, the moving distance of each support in the corresponding movement axis direction per set unit time thus calculated.

According to this configuration, if the emergency stop command is inputted to the stop command input device, the moving distance of each support in the corresponding movement axis direction per set unit time is decreased to 0 during the deceleration stop period, whereby the movement target object can be stopped. Further, in this configuration, the length of the set unit time is decreased to 0, and the moving distance of each support in the corresponding movement axis direction per set unit time for the length to decrease to 0, is calculated on the basis of the processing path, therefore when the movement target object is urgently stopped, the responsiveness, from the input of the emergency stop command to the stop command input device to the actual execution of the emergency stop of the movement target object, can be improved, while preventing the deviation of the movement locus of the movement target object from the processing path.

In this case, it is preferable that the special command input device includes a restart command input device for inputting, as the special command, a restart command for restarting and accelerating the movement of the stopping movement target object, and in response to the input of the restart command to the restart command input device after the emergency stop command is inputted to the stop command input device, the computing unit calculates the set unit time in a predetermined restart acceleration period on the basis of a restart period unit time change function, which increases the length of the set unit time from 0 to a predetermined length during the restart acceleration period, and calculates, on the basis of the processing path, the moving distance of each support in the corresponding movement axis direction per set unit time thus calculated.

According to this configuration, if the restart command is inputted to the restart command input device in the state of the movement target object stopping in response to the emergency stop command, the moving distance of each support in the corresponding movement axis direction per set unit time is increased from 0 to the specified moving distance as the unit time increases during the restart acceleration period, whereby the restart involving acceleration of the movement target object can be executed. Further, in this configuration, the length of the set unit time is increased from 0 to the specified length, and the moving distance of each support in the corresponding movement axis direction per set unit time for the length to increase, is calculated on the basis of the processing path. Therefore, when the stopping movement target object is restarted, the responsiveness, from the input of the restart command to the restart command input device to the actual execution of the restart and acceleration of the movement target object, can be improved, while preventing the deviation of the movement locus of the movement target object from the processing path.

In the above numerical control apparatus, it is preferable that the special command input device includes a velocity change command input device which can be input, as the special command, an acceleration command which includes an instruction to increase the movement velocity of the movement target object and information on an acceleration rate, which is an increasing rate of the movement velocity, or a deceleration command which includes an instruction to decrease the movement velocity of the movement target object and information on a deceleration rate, which is a decreasing rate of the movement velocity, and in response to the input of the acceleration command to the velocity change command input device, the computing unit calculates the set unit time in a predetermined acceleration period on the basis of an acceleration period unit time change function, which increases the length of the set unit time from a length in the state immediately before the input of the acceleration command to the velocity change command input device to a length corresponding to the acceleration rate included in the acceleration command during the acceleration period, and calculates, on the basis of the processing path, the moving distance of each support in the corresponding movement axis direction per set unit time thus calculated, and in response to the input of the deceleration command to the velocity change command input device, the computing unit calculates the set unit time in a predetermined deceleration period on the basis of a deceleration period unit time change function, which decreases the length of the set unit time from a length in the state immediately before the input of the deceleration command to the velocity change command input device to a length corresponding to the deceleration rate included in the deceleration command during the deceleration period, and calculates, on the basis of the processing path, the moving distance of each support in the corresponding movement axis direction per set unit time thus calculated.

According to this configuration, if the acceleration command is inputted to the velocity change command input device, acceleration of the movement target object can be executed during the acceleration period by increasing the moving distance of each support in the corresponding movement axis direction per set unit time, from the moving distance per set unit time immediately before the input of the acceleration command to the velocity change command input device to the moving distance according to the acceleration rate included in the acceleration command. If the deceleration command is inputted to the velocity change command input device, on the other hand, deceleration of the movement target object can be executed during the deceleration period by decreasing the moving distance of each support in the corresponding movement axis direction per set unit time, from the moving distance per set unit time immediately before the input of the deceleration command to the velocity change command input device to the moving distance according to the deceleration rate included in the deceleration command. In this configuration, when the acceleration command is inputted to the velocity change command input device, the set unit time is increased and the moving distance of each support in the corresponding movement axis direction per set unit time of which length is increased is calculated on the basis of the processing path, and when the deceleration command is inputted to the velocity change command input device, on the other hand, the set unit time is decreased and the moving distance of each support in the corresponding movement axis direction per set unit time of which length is decreased is calculated on the basis of the processing path, therefore the responsiveness, from the input of the acceleration command or the deceleration command to the velocity change command input device to the actual execution of acceleration or deceleration of the movement target object, can be improved, while preventing deviation of the movement locus of the movement target object from the processing path when the movement velocity of the movement target object when the workpiece is processed is changed in response to the input of the acceleration command or the deceleration command to the velocity change command input device.

As described above, according to the above embodiment, when operation involving velocity change of a movement target object is executed in a machine tool separately from normal transfer of a movement target object performed when a workpiece is processed, responsiveness, from instructing the operation involving the velocity change of the movement target object to actual execution of this operation, can be improved, while preventing deviation of the movement locus of the movement target object from the processing path instructed by the processing command program.

## Claims

**1.** A numerical control apparatus installed in a machine tool which includes: a plurality of transfer devices which transfer a movement target object, which is a workpiece or a tool to process the workpiece, when the workpiece is processed; and a special command input device for inputting, from outside, a special command for instructing an operation involving a velocity change of the movement target object separately from normal transfer of the movement target object performed when the workpiece is processed, each of the transfer devices including a support for supporting the movement target object, and a driving device which transfers the movement target object by transferring the support in a predetermined movement axis direction, the numerical control apparatus performing numerical control of each of the transfer devices and comprising:

a storage unit which stores a processing command program which specifies a processing path to indicate a path where the movement target object is to move as a reference time elapses when the workpiece is processed;
a computing unit which calculates, on the basis of the processing path, a moving distance of each support in the corresponding movement axis direction per set unit time; and
a drive control unit which causes each driving device to transfer the support corresponding to that driving device in accordance with the moving distance of each support calculated by the computing unit, wherein
in response to the input of the special command to the special command input device, the computing unit changes a length of the set unit time from a length in the state immediately before the input of the special command to a length corresponding to the velocity change of the movement target object instructed by the special command, and calculates, on the basis of the processing path, the moving distance of each support in the corresponding movement axis direction per set unit time of which length has been changed.

**2.** The numerical control apparatus according to Claim 1, wherein
the drive control unit controls operation of each driving device so that the driving device transfers, per reference unit time which is a reference of actuating of the driving device, the corresponding support in the corresponding axis direction for the moving distance per the set unit time calculated by the computing unit, and
the computing unit sets the set unit time as a unit time which is different from the reference unit time, and calculates, on the basis of the processing path, the moving distance of each support per set unit time in the corresponding movement axis direction.

**3.** The numerical control apparatus according to Claim 1 or 2, wherein
the special command input device includes a stop command input device for inputting, as the special command, an emergency stop command for urgently decelerating and stopping movement of the movement target object, and
in response to the input of the emergency stop command to the stop command input device, the computing unit calculates the set unit time in a predetermined deceleration stop period, based on a stop period unit time change function, which decreases the length of the set unit time from a length in the state immediately before the input of the emergency stop command to the stop command input device to 0 during the deceleration stop period, and calculates, on the basis of the processing path, the moving distance of each support in the corresponding movement axis direction per set unit time thus calculated.

**4.** The numerical control apparatus according to Claim 3, wherein
the special command input device includes a restart command input device for inputting, as the special command, a restart command for restarting and accelerating the movement of the stopping movement target object, and
in response to the input of the restart command to the restart command input device after the emergency stop command is inputted to the stop command input device, the computing unit calculates the set unit time in a predetermined restart acceleration period on the basis of a restart period unit time change function, which increases the length of the set unit time from 0 to a predetermined length during the restart acceleration period, and calculates, on the basis of the processing path, the moving distance of each support in the corresponding movement axis direction per set unit time thus calculated.

**5.** The numerical control apparatus according to any one of Claims 1 to 4, wherein
the special command input device includes a velocity change command input device which can be input, as the special command, an acceleration command which includes an instruction to increase the movement velocity of the movement target object and information on an acceleration rate, which is an increasing rate of the movement velocity, or a deceleration command which includes an instruction to decrease the movement velocity of the movement target object and information on a deceleration rate, which is a decreasing rate of the movement velocity, and
in response to the input of the acceleration command to the velocity change command input device, the computing unit calculates the set unit time in a predetermined acceleration period on the basis of an acceleration period unit time change function, which increases the length of the set unit time from a length in the state immediately before the input of the acceleration command to the velocity change command input device to a length corresponding to the acceleration rate included in the acceleration command during the acceleration period, and calculates, on the basis of the processing path, the moving distance of each support in the corresponding movement axis direction per set unit time thus calculated, and
in response to the input of the deceleration command to the velocity change command input device, the computing unit calculates the set unit time in a predetermined deceleration period on the basis of a deceleration period unit time change function, which decreases the length of the set unit time from a length in the state immediately before the input of the deceleration command to the velocity change command input device to a length corresponding to the deceleration rate included in the deceleration command during the deceleration period, and calculates, on the basis of the processing path, the moving distance of each support in the corresponding movement axis direction per set unit time thus calculated.

FIG. 1

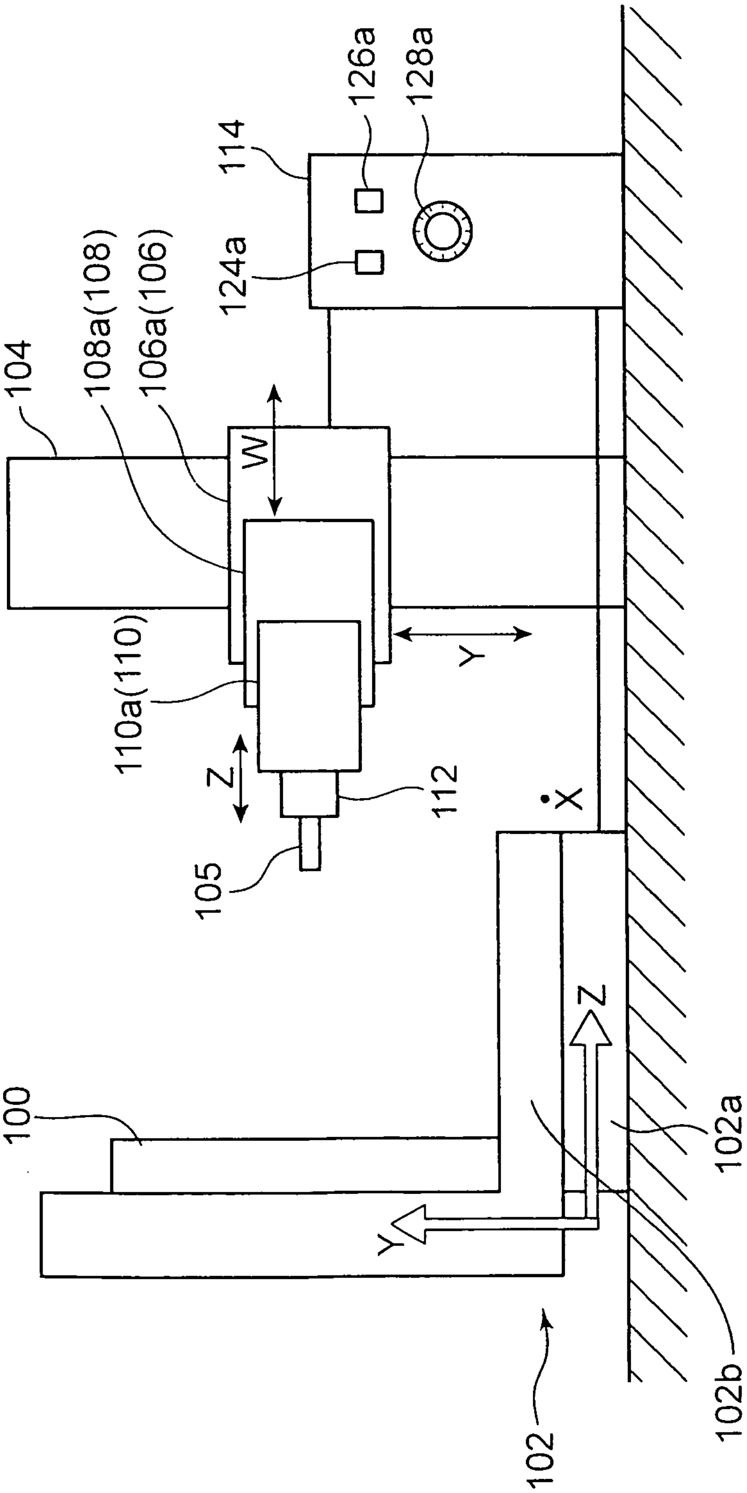
100
102
102a
102b
104
105
106a(106)
108a(108)
110a(110)
112
114
124a
126a
128a
W
X
Y
Z
Y
Z

FIG.2

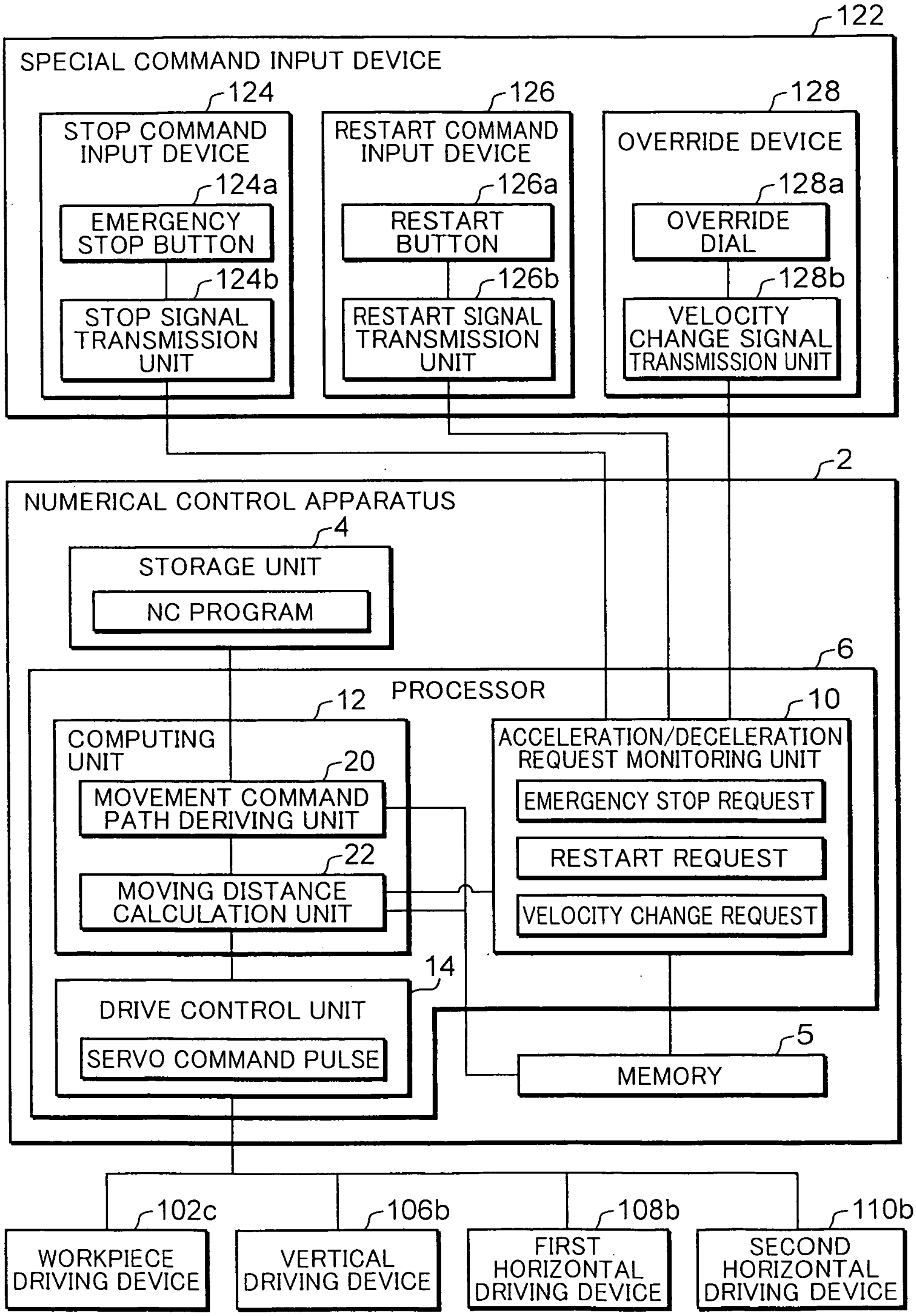
122
SPECIAL COMMAND INPUT DEVICE
124
STOP COMMAND INPUT DEVICE
124a
EMERGENCY STOP BUTTON
124b
STOP SIGNAL TRANSMISSION UNIT
126
RESTART COMMAND INPUT DEVICE
126a
RESTART BUTTON
126b
RESTART SIGNAL TRANSMISSION UNIT
128
OVERRIDE DEVICE
128a
OVERRIDE DIAL
128b
VELOCITY CHANGE SIGNAL TRANSMISSION UNIT
2
NUMERICAL CONTROL APPARATUS
4
STORAGE UNIT
NC PROGRAM
6
PROCESSOR
12
COMPUTING UNIT
20
MOVEMENT COMMAND PATH DERIVING UNIT
22
MOVING DISTANCE CALCULATION UNIT
10
ACCELERATION/DECELERATION REQUEST MONITORING UNIT
EMERGENCY STOP REQUEST
RESTART REQUEST
VELOCITY CHANGE REQUEST
14
DRIVE CONTROL UNIT
SERVO COMMAND PULSE
5
MEMORY
102c
WORKPIECE DRIVING DEVICE
106b
VERTICAL DRIVING DEVICE
108b
FIRST HORIZONTAL DRIVING DEVICE
110b
SECOND HORIZONTAL DRIVING DEVICE

FIG.3

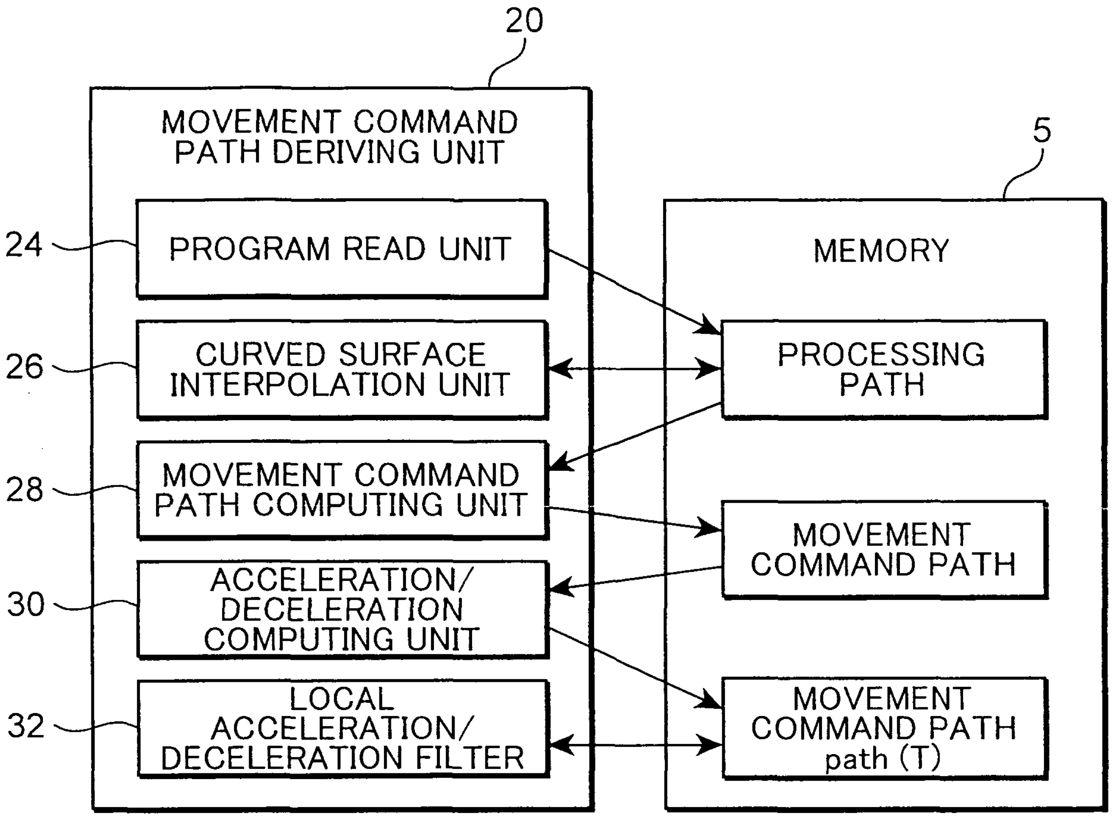
20
MOVEMENT COMMAND PATH DERIVING UNIT
24
PROGRAM READ UNIT
26
CURVED SURFACE INTERPOLATION UNIT
28
MOVEMENT COMMAND PATH COMPUTING UNIT
30
ACCELERATION/ DECELERATION COMPUTING UNIT
32
LOCAL ACCELERATION/ DECELERATION FILTER
5
MEMORY
PROCESSING PATH
MOVEMENT COMMAND PATH
MOVEMENT COMMAND PATH path (T)

FIG.4

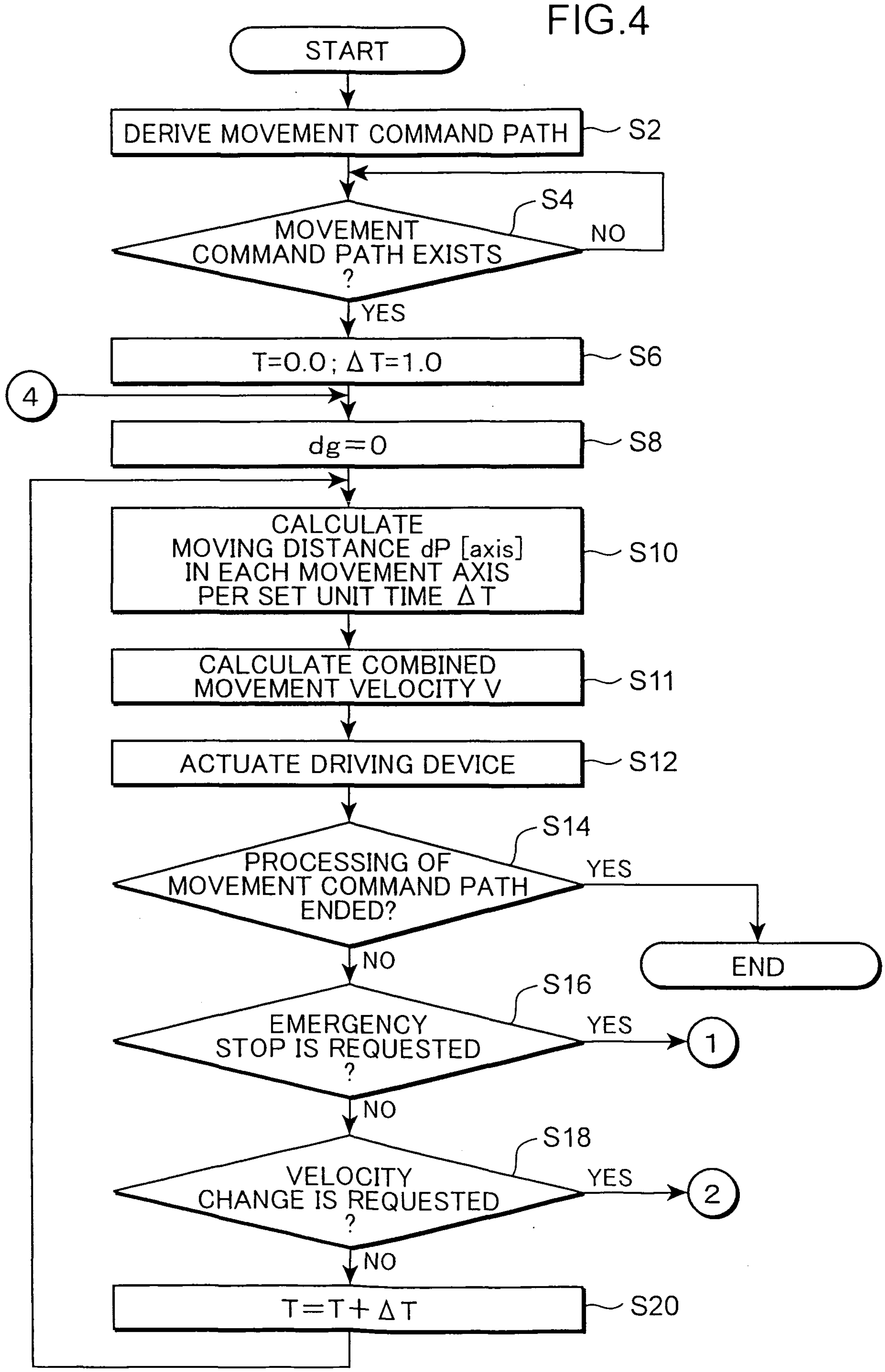
START
DERIVE MOVEMENT COMMAND PATH
S2
MOVEMENT COMMAND PATH EXISTS ?
S4
NO
YES
T=0.0 ; ΔT=1.0
S6
4
dg=0
S8
CALCULATE MOVING DISTANCE dP [axis] IN EACH MOVEMENT AXIS PER SET UNIT TIME ΔT
S10
CALCULATE COMBINED MOVEMENT VELOCITY V
S11
ACTUATE DRIVING DEVICE
S12
PROCESSING OF MOVEMENT COMMAND PATH ENDED?
S14
YES
END
NO
EMERGENCY STOP IS REQUESTED ?
S16
YES
1
NO
VELOCITY CHANGE IS REQUESTED ?
S18
YES
2
NO
T=T+ΔT
S20

FIG.5

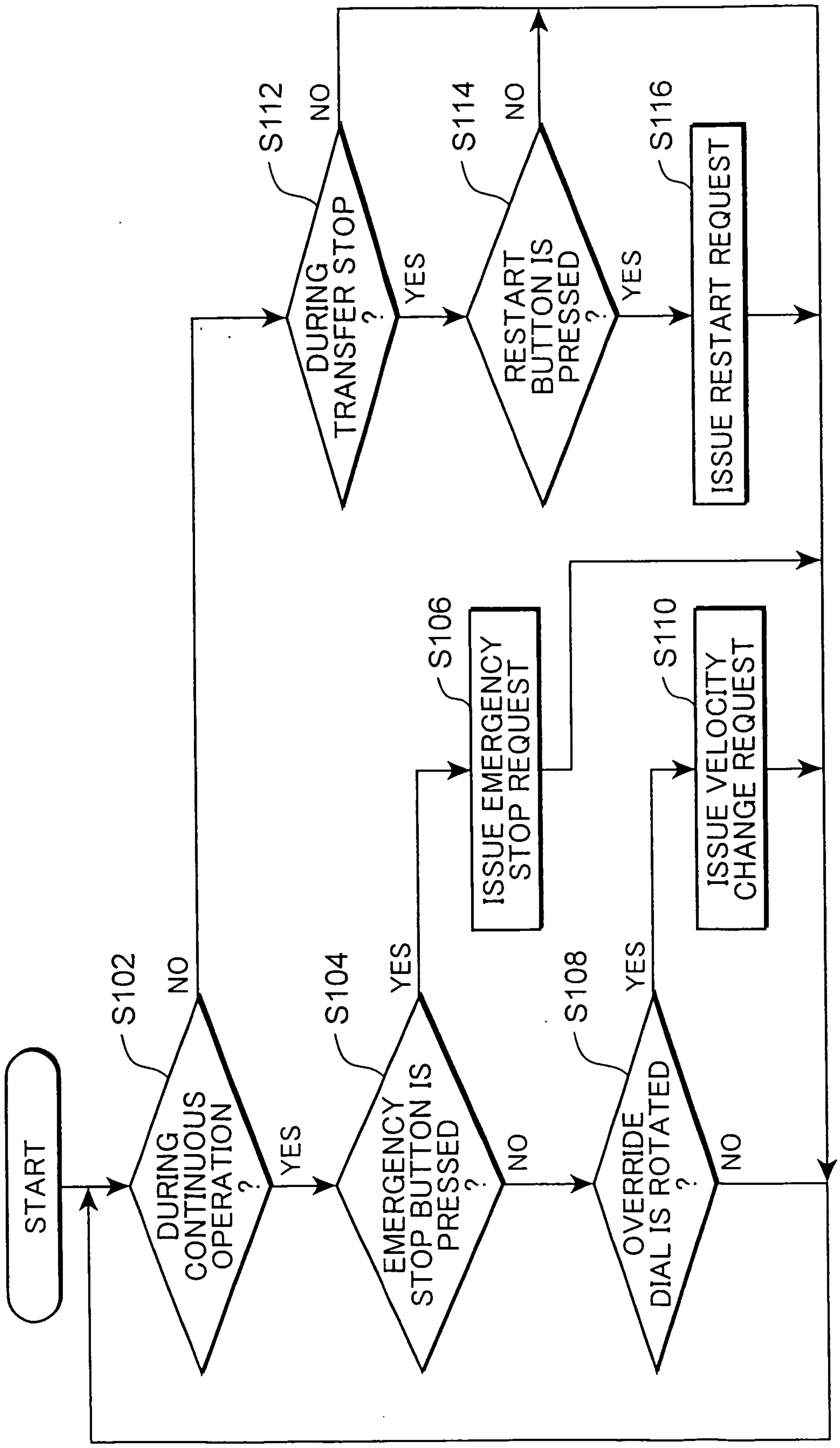
START
S102
DURING CONTINUOUS OPERATION ?
YES
NO
S104
EMERGENCY STOP BUTTON IS PRESSED ?
YES
NO
S106
ISSUE EMERGENCY STOP REQUEST
S108
OVERRIDE DIAL IS ROTATED ?
YES
NO
S110
ISSUE VELOCITY CHANGE REQUEST
S112
DURING TRANSFER STOP ?
YES
NO
S114
RESTART BUTTON IS PRESSED ?
YES
NO
S116
ISSUE RESTART REQUEST

FIG.6

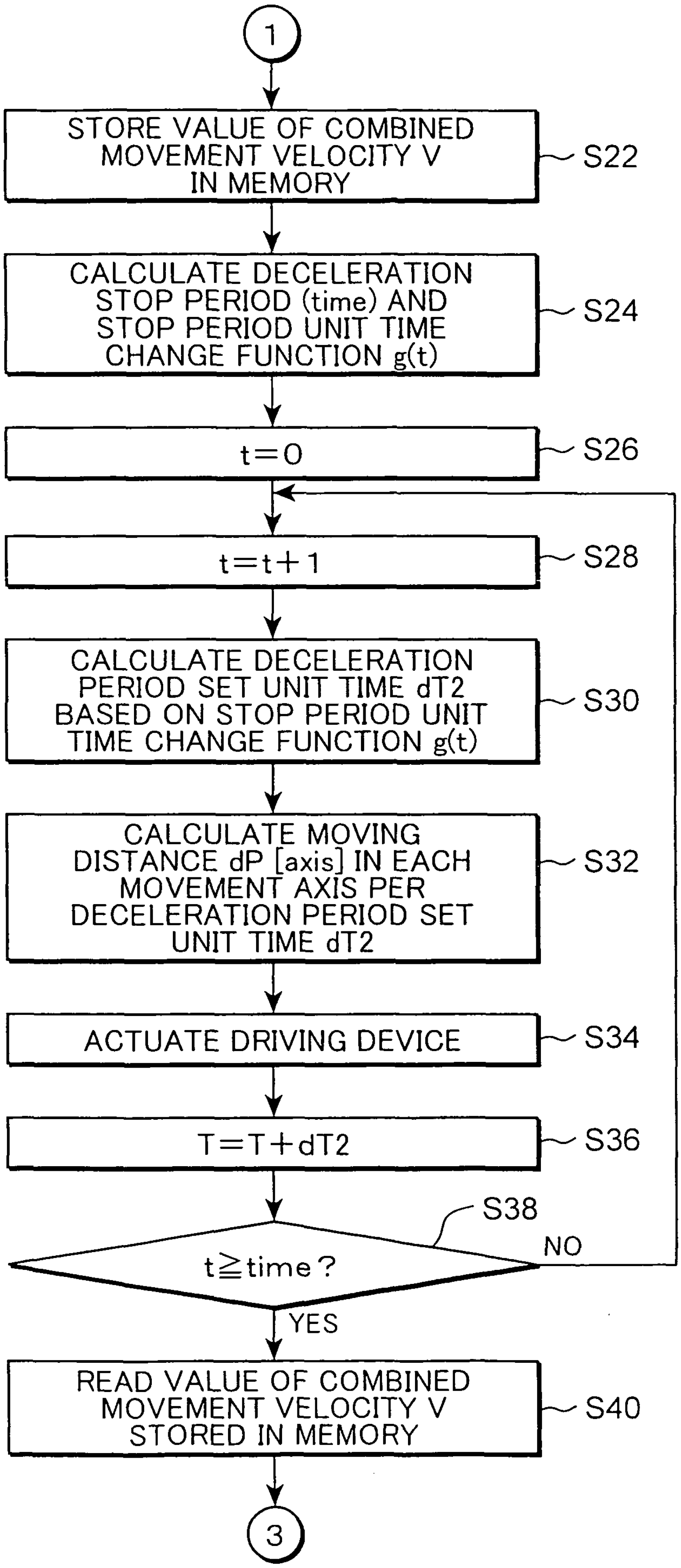
1
STORE VALUE OF COMBINED MOVEMENT VELOCITY V IN MEMORY
S22
CALCULATE DECELERATION STOP PERIOD (time) AND STOP PERIOD UNIT TIME CHANGE FUNCTION g(t)
S24
t=0
S26
t=t+1
S28
CALCULATE DECELERATION PERIOD SET UNIT TIME dT2 BASED ON STOP PERIOD UNIT TIME CHANGE FUNCTION g(t)
S30
CALCULATE MOVING DISTANCE dP [axis] IN EACH MOVEMENT AXIS PER DECELERATION PERIOD SET UNIT TIME dT2
S32
ACTUATE DRIVING DEVICE
S34
T=T+dT2
S36
S38
t≧time?
NO
YES
READ VALUE OF COMBINED MOVEMENT VELOCITY V STORED IN MEMORY
S40
3

FIG.7

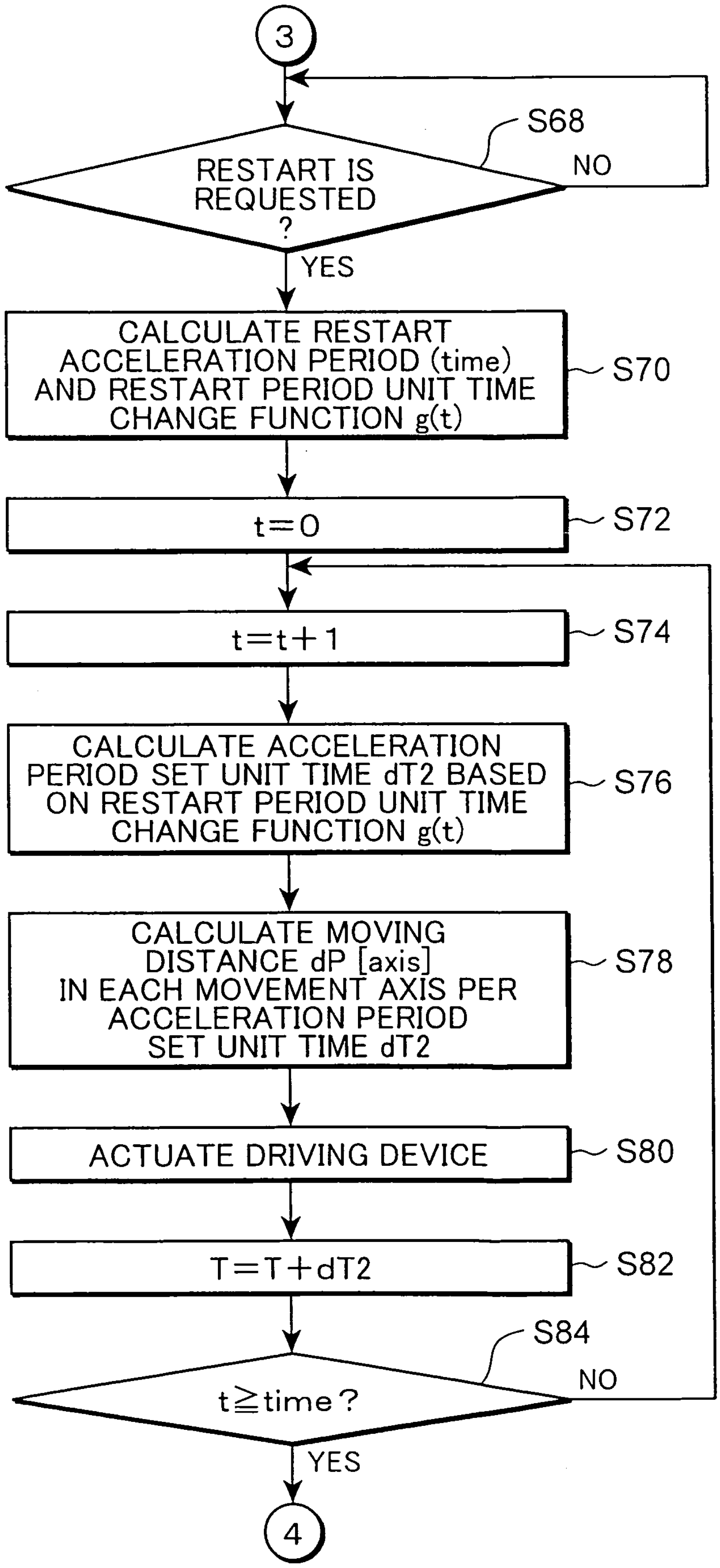
3
S68
RESTART IS REQUESTED ?
NO
YES
CALCULATE RESTART ACCELERATION PERIOD (time) AND RESTART PERIOD UNIT TIME CHANGE FUNCTION g(t)
S70
t=0
S72
t=t+1
S74
CALCULATE ACCELERATION PERIOD SET UNIT TIME dT2 BASED ON RESTART PERIOD UNIT TIME CHANGE FUNCTION g(t)
S76
CALCULATE MOVING DISTANCE dP [axis] IN EACH MOVEMENT AXIS PER ACCELERATION PERIOD SET UNIT TIME dT2
S78
ACTUATE DRIVING DEVICE
S80
T=T+dT2
S82
S84
t≧time ?
NO
YES
4

FIG.8

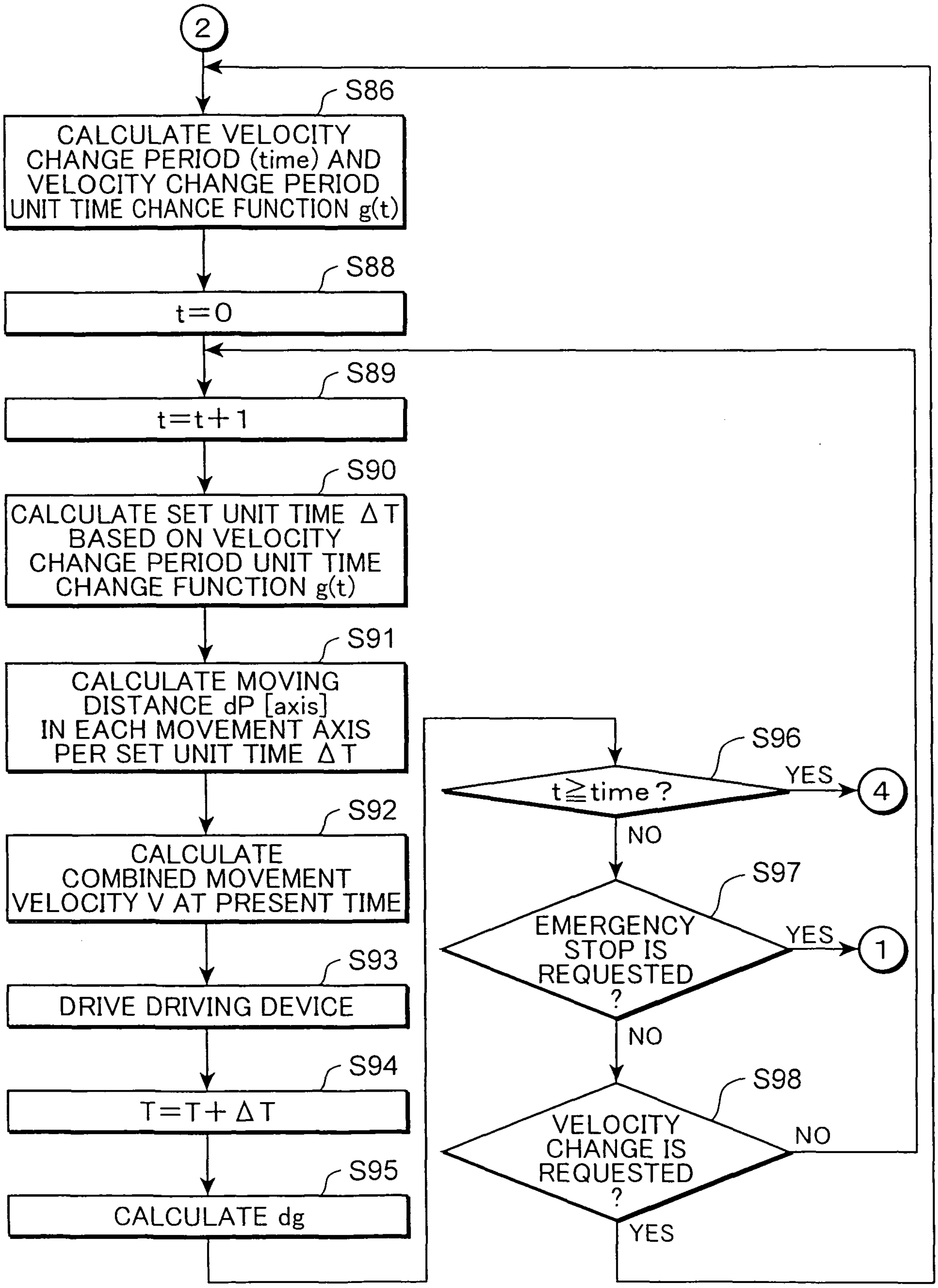
2
S86
CALCULATE VELOCITY CHANGE PERIOD (time) AND VELOCITY CHANGE PERIOD UNIT TIME CHANCE FUNCTION g(t)
S88
t=0
S89
t=t+1
S90
CALCULATE SET UNIT TIME ΔT BASED ON VELOCITY CHANGE PERIOD UNIT TIME CHANGE FUNCTION g(t)
S91
CALCULATE MOVING DISTANCE dP [axis] IN EACH MOVEMENT AXIS PER SET UNIT TIME ΔT
S92
CALCULATE COMBINED MOVEMENT VELOCITY V AT PRESENT TIME
S93
DRIVE DRIVING DEVICE
S94
T=T+ΔT
S95
CALCULATE dg
S96
t≧time ?
YES
4
NO
S97
EMERGENCY STOP IS REQUESTED ?
YES
1
NO
S98
VELOCITY CHANGE IS REQUESTED ?
NO
YES

FIG.9

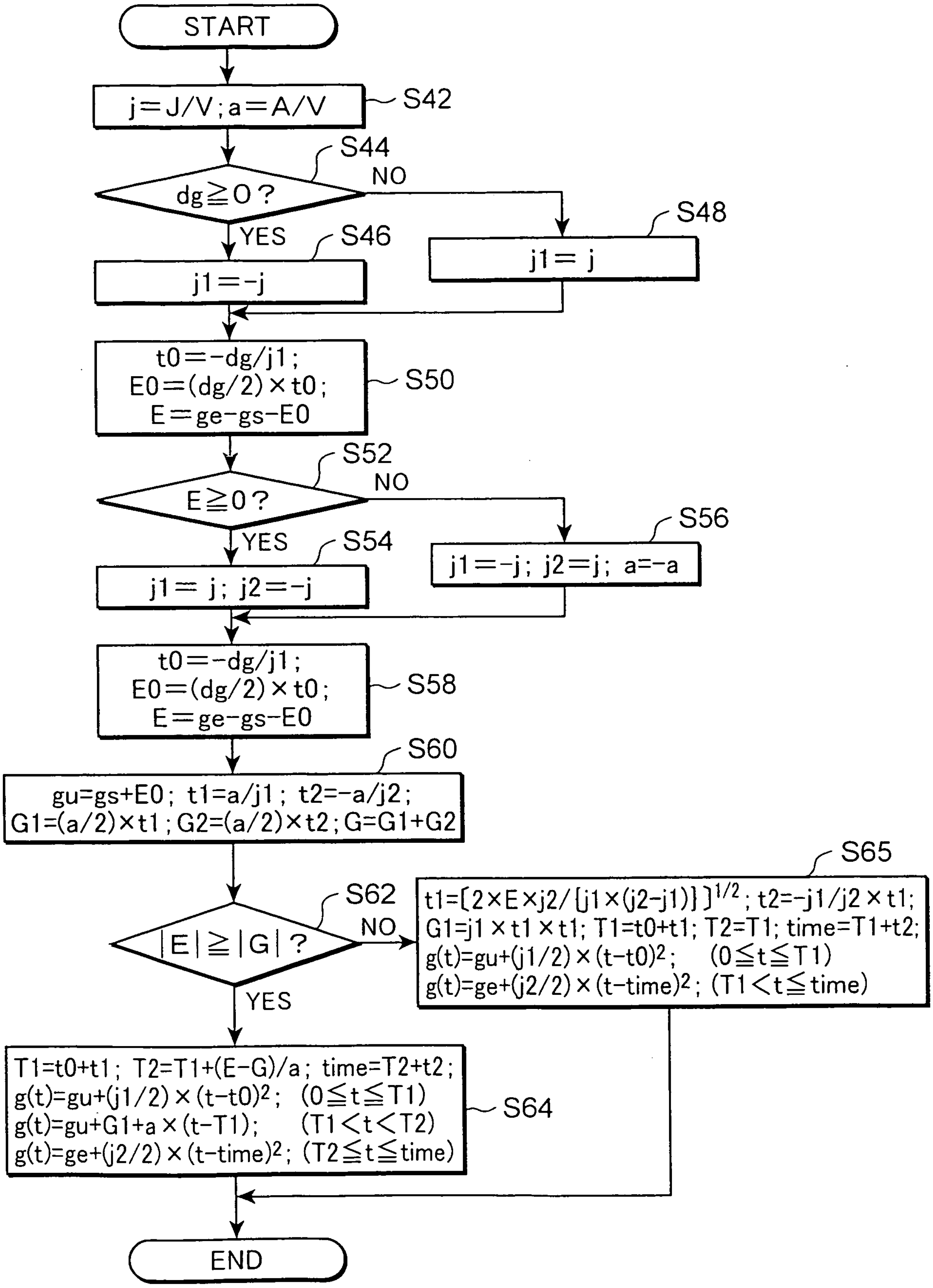
START
j=J/V; a=A/V
S42
S44
dg≧0?
NO
YES
S48
j1= j
S46
j1=-j
t0=-dg/j1;
E0=(dg/2)×t0;
E=ge-gs-E0
S50
S52
E≧0?
NO
YES
S56
j1=-j; j2=j; a=-a
S54
j1= j; j2=-j
t0=-dg/j1;
E0=(dg/2)×t0;
E=ge-gs-E0
S58
S60
gu=gs+E0; t1=a/j1; t2=-a/j2;
G1=(a/2)×t1; G2=(a/2)×t2; G=G1+G2
S65
S62
|E|≧|G|?
NO
t1=[2×E×j2/{j1×(j2-j1)}]^1/2; t2=-j1/j2×t1;
G1=j1×t1×t1; T1=t0+t1; T2=T1; time=T1+t2;
g(t)=gu+(j1/2)×(t-t0)^2; (0≦t≦T1)
g(t)=ge+(j2/2)×(t-time)^2; (T1<t≦time)
YES
T1=t0+t1; T2=T1+(E-G)/a; time=T2+t2;
g(t)=gu+(j1/2)×(t-t0)^2; (0≦t≦T1)
g(t)=gu+G1+a×(t-T1); (T1<t<T2)
g(t)=ge+(j2/2)×(t-time)^2; (T2≦t≦time)
S64
END

FIG.10

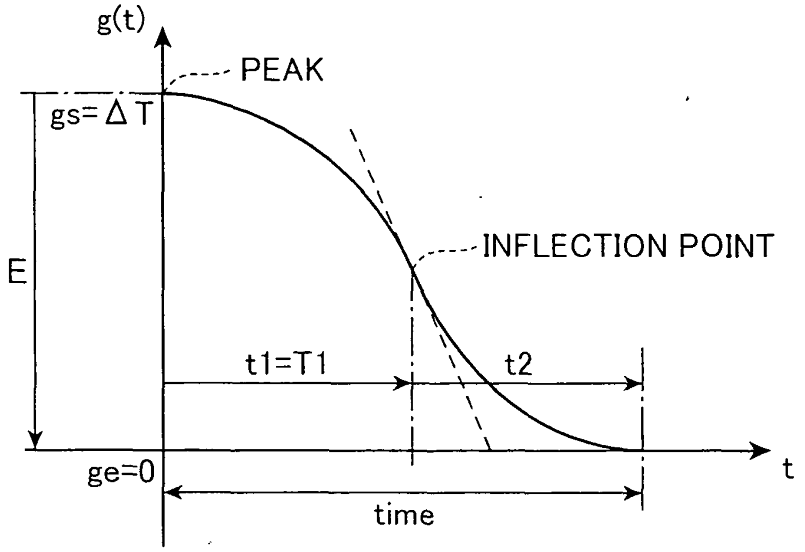
g(t)
PEAK
gs=ΔT
INFLECTION POINT
E
t1=T1
t2
ge=0
t
time

FIG.11

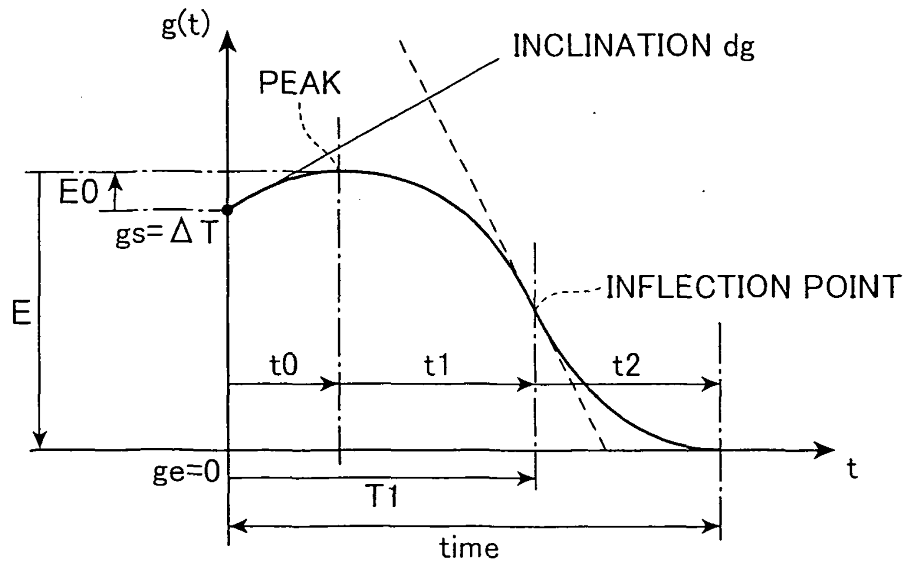
g(t)
INCLINATION dg
PEAK
E0
gs=ΔT
INFLECTION POINT
E
t0
t1
t2
ge=0
T1
t
time

FIG.12

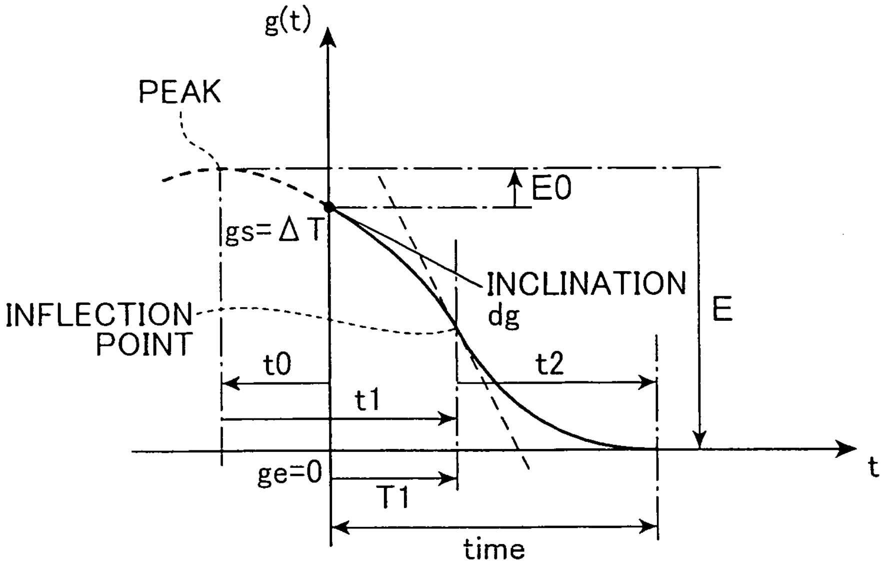
g(t)
PEAK
E0
gs=ΔT
INCLINATION
dg
INFLECTION
POINT
E
t0
t2
t1
t
ge=0
T1
time

FIG.13

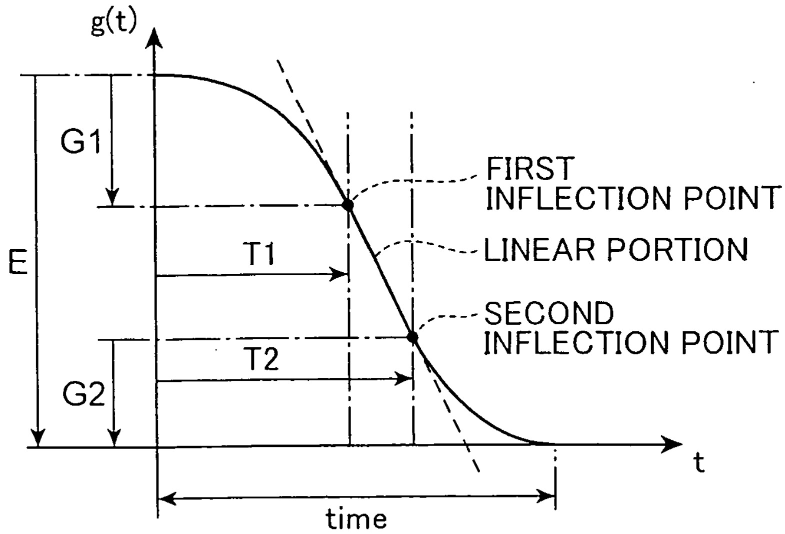
g(t)
G1
FIRST
INFLECTION POINT
LINEAR PORTION
E
T1
SECOND
INFLECTION POINT
T2
G2
t
time

FIG.14

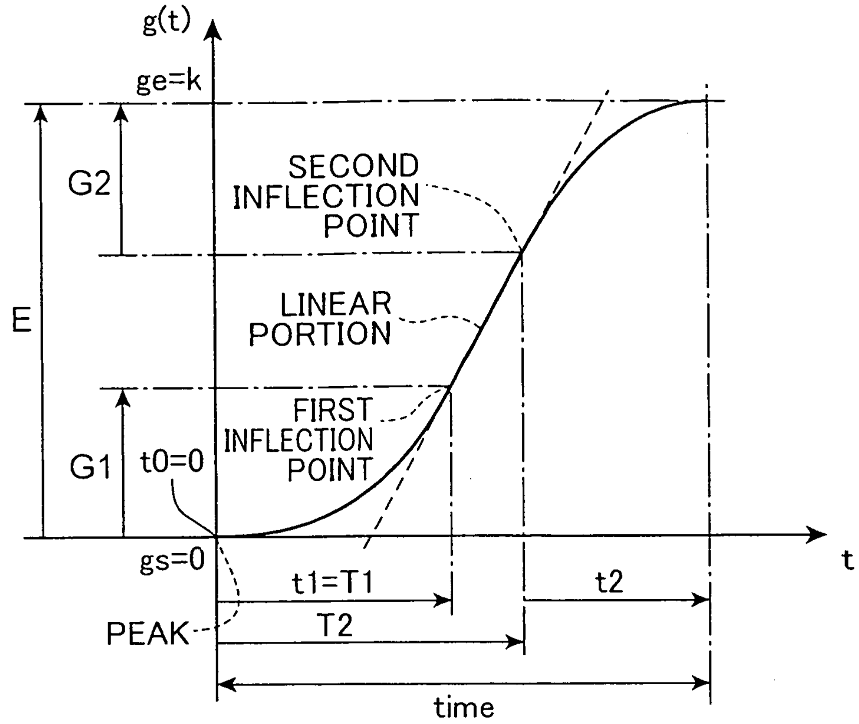
g(t)
ge=k
G2
SECOND INFLECTION POINT
E
LINEAR PORTION
FIRST INFLECTION POINT
G1
t0=0
gs=0
PEAK
t1=T1
T2
t2
t
time

FIG.15

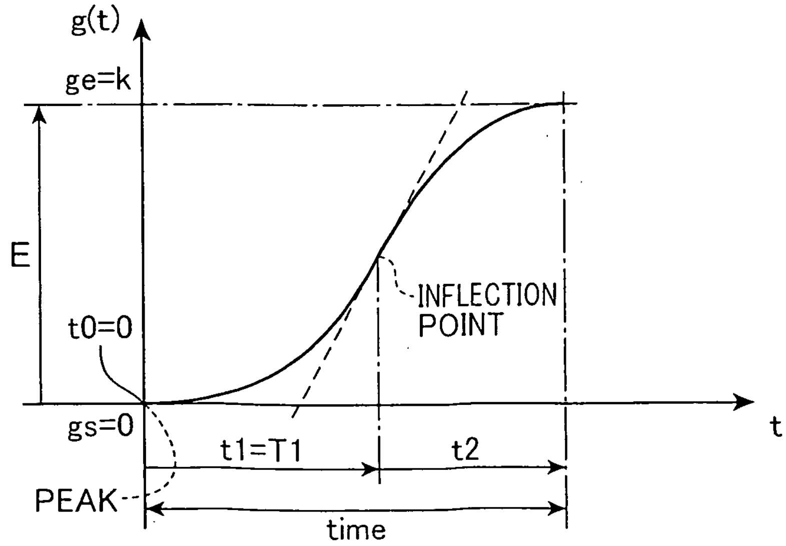
g(t)
ge=k
E
t0=0
INFLECTION POINT
gs=0
PEAK
t1=T1
t2
t
time

FIG.16

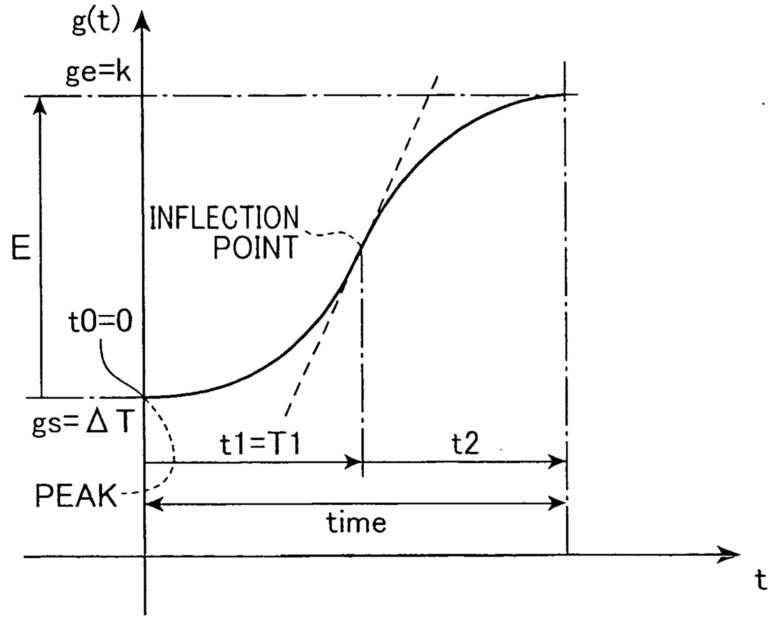
g(t)
ge=k
E
INFLECTION POINT
t0=0
gs=ΔT
PEAK
t1=T1
t2
time
t

FIG.17

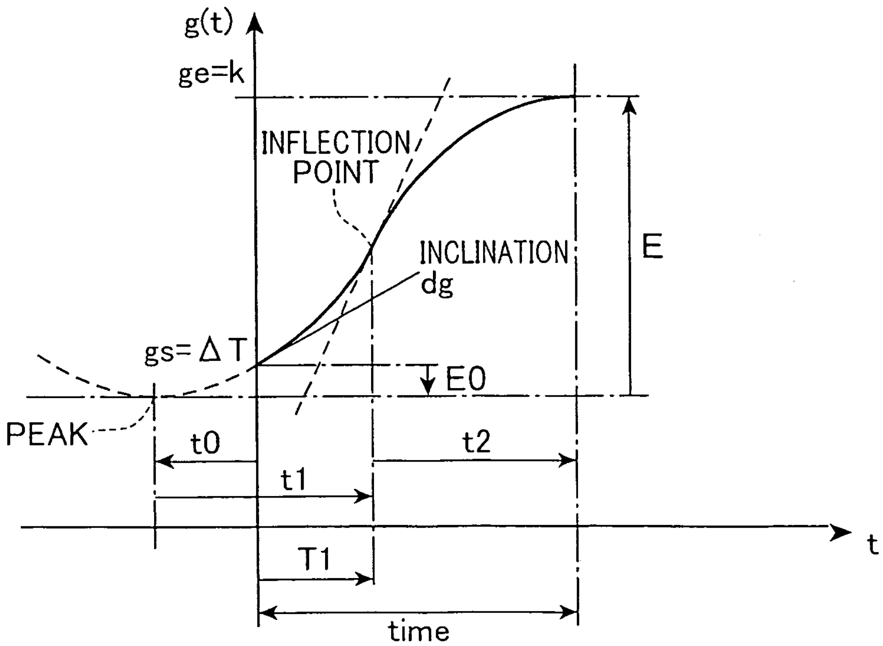
g(t)
ge=k
INFLECTION POINT
INCLINATION dg
E
gs=ΔT
E0
PEAK
t0
t1
t2
T1
time
t

FIG.18

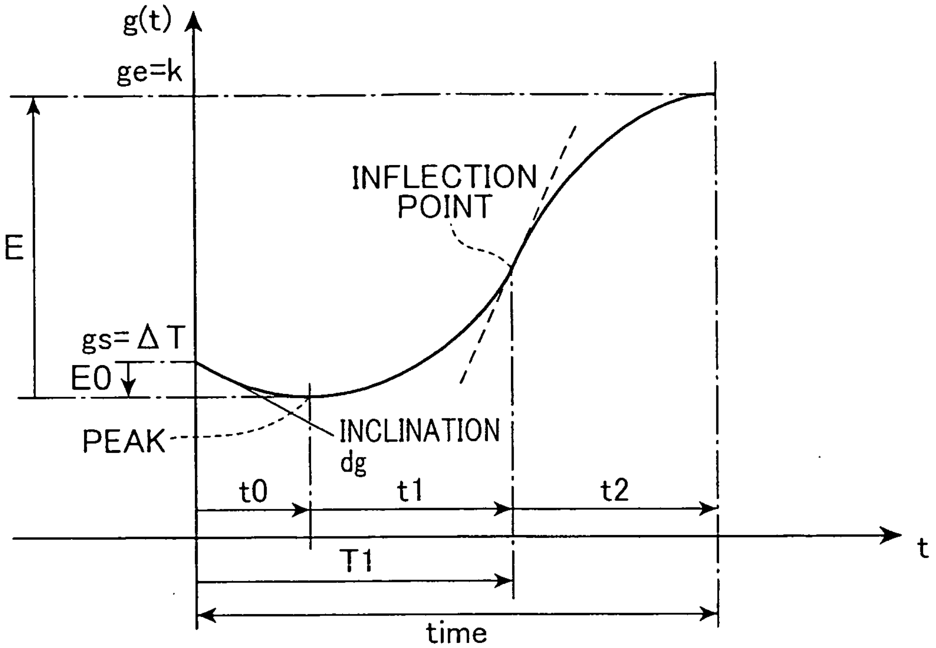
g(t)
ge=k
E
INFLECTION POINT
gs=ΔT
E0
PEAK
INCLINATION dg
t0
t1
t2
t
T1
time

FIG.19

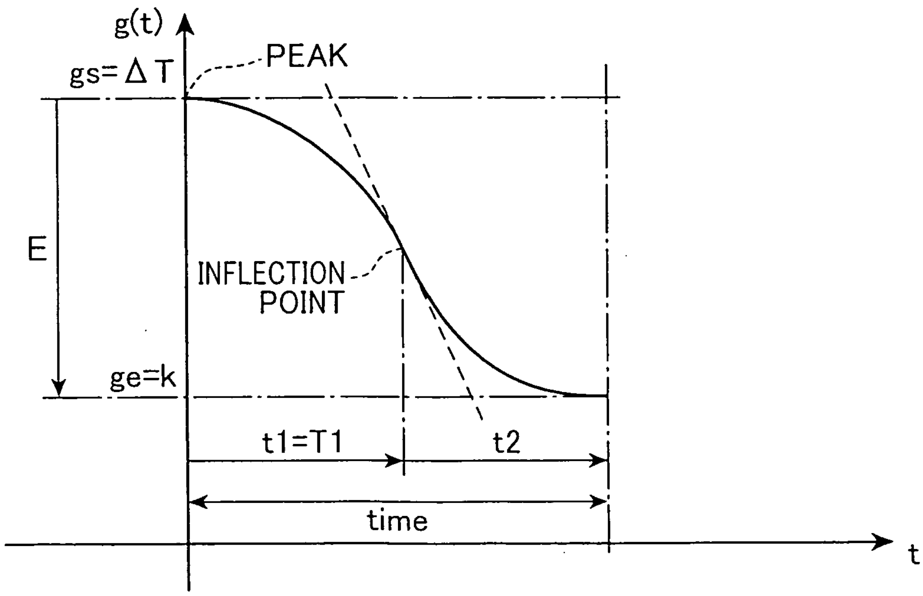
g(t)
gs=ΔT
PEAK
E
INFLECTION POINT
ge=k
t1=T1
t2
time
t

FIG.20

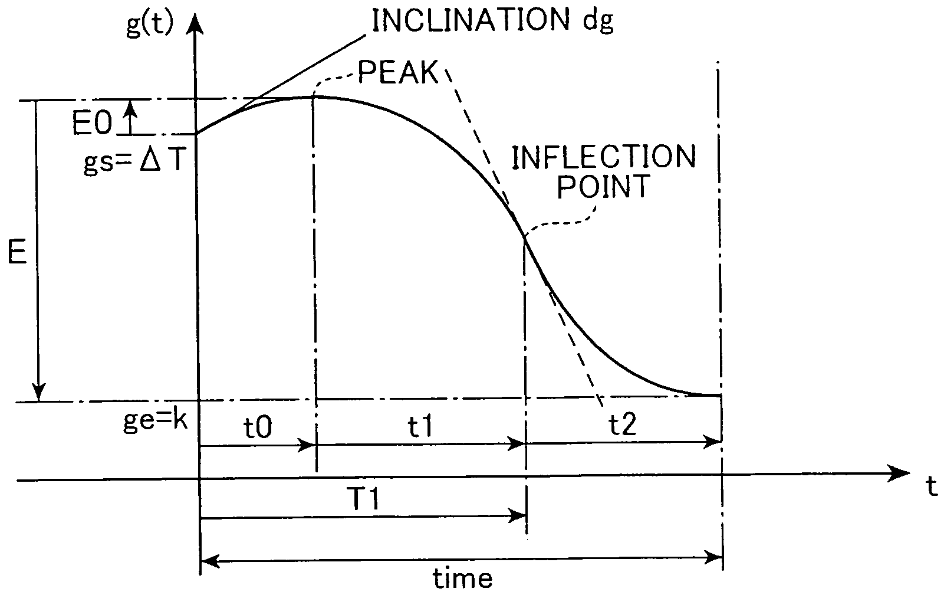
g(t)
INCLINATION dg
PEAK
E0
gs=ΔT
INFLECTION POINT
E
ge=k
t0
t1
t2
t
T1
time

FIG.21

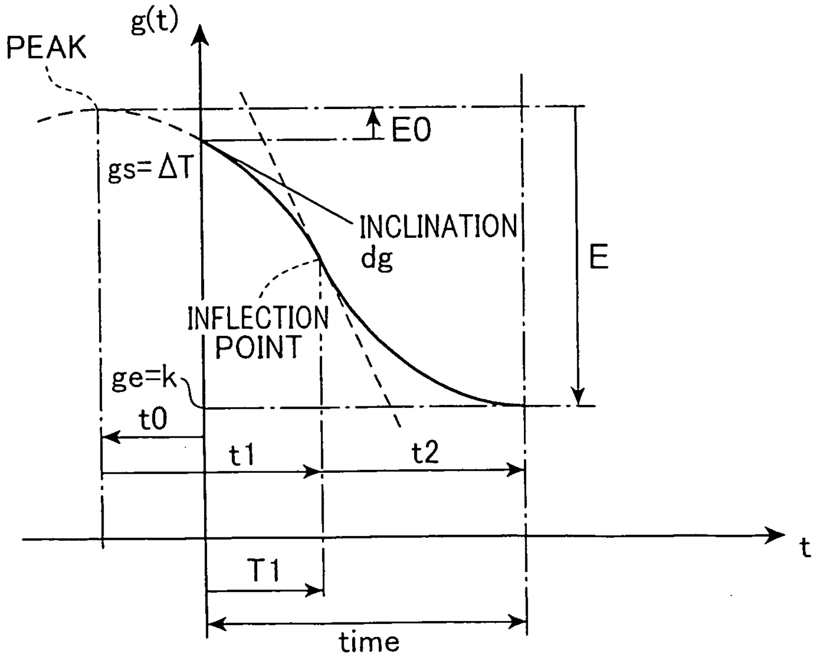
PEAK
g(t)
E0
gs=ΔT
INCLINATION dg
E
INFLECTION POINT
ge=k
t0
t1
t2
t
T1
time

**INTERNATIONAL SEARCH REPORT**

International application No.
PCT/JP2011/004277

A. CLASSIFICATION OF SUBJECT MATTER
*G05B19/404*(2006.01)i, *G05B19/416*(2006.01)i

According to International Patent Classification (IPC) or to both national classification and IPC

B. FIELDS SEARCHED

Minimum documentation searched (classification system followed by classification symbols)
G05B19/404, G05B19/416

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-202915 A (Fanuc Ltd.), 30 July 1999 (30.07.1999), paragraphs [0025] to [0033] (Family: none) | 1-5 |
| X | JP 63-273108 A (Fanuc Ltd.), 10 November 1988 (10.11.1988), page 2, lower left column, line 13 to lower right column, line 14 & US 004894596 A1 & EP 000359819 A1 & WO 88/008562 A1 & DE 003886748 D & KR 10-1991-0002446 B | 1-5 |
| A | JP 2001-216008 A (Mitsubishi Electric Corp.), 10 August 2001 (10.08.2001), entire text; all drawings (Family: none) | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 October, 2011 (21.10.11) | 01 November, 2011 (01.11.11) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2011/004277

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-55161 A (Shin Nippon Koki Co., Ltd.), 11 March 2010 (11.03.2010), entire text; all drawings & EP 002328052 A1 & WO 2010/024041 A1 | 1-5 |
| A | JP 2008-225825 A (Shin Nippon Koki Co., Ltd.), 25 September 2008 (25.09.2008), entire text; all drawings (Family: none) | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010055161 A
- JP 2008225825 A